# EUROPEAN PATENT SPECIFICATION

(11) **EP 4 271 006 B1**
(45) Date of publication and mention of the grant of the patent: **04.03.2026**
(21) Application number: 21913812.0
(22) Date of filing: 09.12.2021
(51) Int. Cl.: H04W 4/80, H04L 69/24

(54) **CONNECTION ESTABLISHMENT METHOD AND ELECTRONIC DEVICE**
VERBINDUNGSAUFBAUVERFAHREN UND ELEKTRONISCHE VORRICHTUNG
PROCÉDÉ D'ÉTABLISSEMENT DE CONNEXION ET DISPOSITIF ÉLECTRONIQUE

(30) Priority: 31.12.2020 CN 202011620420
(43) Date of publication of application: 01.11.2023
(73) Proprietor: Huawei Technologies Co., Ltd., Shenzhen, Guangdong 518129 (CN)
(72) Inventor: LIANG, Qiandeng, Shenzhen, Guangdong 518129 (CN); CHEN, Chen, Shenzhen, Guangdong 518129 (CN)
(74) Representative: Gill Jennings & Every LLP
(86) International application number: PCT/CN2021/136692
(87) International publication number: WO 2022/143071

(56) References cited:
- WO-A1-2017/219657
- WO-A1-2020/076110
- CN-A- 101 594 578
- CN-A- 108 541 384
- CN-A- 110 178 389
- CN-A- 110 870 353
- CN-B- 101 594 578
- US-A1- 2013 309 971

## Description

### TECHNICAL FIELD

Embodiments of this application relate to the field of terminal technologies, and in particular, to a connection establishment method and an electronic device.

### BACKGROUND

With development of electronic devices, a collaboration capability and an interaction capability between the electronic devices are improved. For example, a mobile phone sends, by using a wireless projection technology, displayed content to a large screen device for display, to improve a display effect. For another example, audio and video files can be shared between a mobile phone and a notebook computer by using a near field communication (near field communication, NFC) function.

However, in a process of implementing the wireless projection technology and the file sharing function, a Bluetooth connection needs to be first established, and then a wireless fidelity (wireless fidelity, Wi-Fi) direct connection between two electronic devices is established based on the Bluetooth connection, to perform data exchange. Due to poor Bluetooth connection performance and stability, a link establishment delay between electronic devices is long, affecting user experience.

CN 101 594 578 B relates to the communication field, and in particular, to a method for establishing a direct link, a station device, and a communication system.

### SUMMARY

The invention is defined by the appended claims. Embodiments falling outside the scope of the claims are for illustration. According to a connection establishment method and an electronic device provided in embodiments of this application, a link can be established between electronic devices directly by using a Wi-Fi network, thereby improving link establishment performance and improving user experience.

To achieve the foregoing objectives, the following technical solutions are used in embodiments of this application.

According to a first aspect, an embodiment of this application provides a connection establishment method, applied to a first electronic device, where the method may include: obtaining a media access control MAC address of a wireless fidelity Wi-Fi interface of a second electronic device in a near field communication NFC tag of the second electronic device; querying, by using the MAC address of the Wi-Fi interface, whether the second electronic device has a Wi-Fi parameter negotiation capability; performing Wi-Fi parameter negotiation with the second electronic device if the second electronic device has the Wi-Fi parameter negotiation capability, to obtain a target radio frequency parameter; and establishing a Wi-Fi Direct channel with the second electronic device by using the target radio frequency parameter.

In some embodiments, a Wi-Fi parameter negotiation capability includes, for example, a Wi-Fi hotspot parameter negotiation capability. The electronic device has the Wi-Fi hotspot parameter negotiation capability, and can perform wireless projection and/or cross-device file sharing.

In some embodiments, after completing Wi-Fi parameter negotiation, the first electronic device and the second electronic device establish the Wi-Fi Direct channel by using the target radio frequency parameter. The Wi-Fi Direct channel includes, for example, a Wi-Fi peer to peer connection channel or a Wi-Fi layer 2 network connection channel.

In some embodiments, the NFC tag includes NFC parameter information, and the MAC address of the Wi-Fi interface is directly indicated in the NFC parameter information by extending the NFC tag.

In this way, based on an NFC function, the first electronic device can directly obtain the MAC address of the Wi-Fi interface of the second electronic device from the NFC tag of the second electronic device. The first electronic device performs Wi-Fi parameter negotiation with the second electronic device by using the MAC address of the Wi-Fi interface, establishes the Wi-Fi Direct channel, and performs data transmission. Compared with a connection method in the conventional technology, there is no need to perform a Bluetooth connection first, and then establish the Wi-Fi Direct channel based on the Bluetooth connection. This avoids a problem that a link establishment delay is long due to poor performance and stability of a Bluetooth connection, and improves interaction performance.

In a possible implementation, before the obtaining a media access control MAC address of a wireless fidelity Wi-Fi interface of a second electronic device in a near field communication NFC tag of the second electronic device, the method further includes: sending a registration request to the AP device, where the registration request requests to register second capability information of the first electronic device, and the second capability information includes the Wi-Fi parameter negotiation capability.

In a possible implementation, the first electronic device and the second electronic device access a Wi-Fi network provided by a same wireless access point AP device, and the querying, by using the MAC address of the Wi-Fi interface, whether the second electronic device has a Wi-Fi parameter negotiation capability includes: receiving device list information sent by the AP device, where the device list information includes capability information of an electronic device accessing the AP device; and querying, in the device list information, first capability information of the second electronic device corresponding to the MAC address of the Wi-Fi interface, and determining whether the first capability information includes the Wi-Fi parameter negotiation capability.

In a possible implementation, the first electronic device and the second electronic device access a Wi-Fi network provided by a same wireless access point AP device, and the querying, by using the MAC address of the Wi-Fi interface, whether the second electronic device has a Wi-Fi parameter negotiation capability includes: sending a capability query request to the AP device, where the capability query request carries the MAC address of the Wi-Fi interface, and the capability query request requests to query whether the second electronic device has the Wi-Fi parameter negotiation capability; and receiving a capability query response sent by the AP device, where the capability query response indicates whether the second electronic device has the Wi-Fi parameter negotiation capability.

In other words, after accessing the network provided by the AP device, the first electronic device and the second electronic device register, with the AP device, a capability supported by the first electronic device and the second electronic device. The AP device broadcasts, according to a local security policy, device information registered by an accessed electronic device in a registration process, and synchronizes the device information to each electronic device connected to a local area network. In this way, after listening to the broadcast, the first electronic device may store information about a list of devices accessing the AP device, and can discover neighboring devices in the local area network based on the information about the list of devices. In this way, after receiving the MAC address of the Wi-Fi interface, the first electronic device can discover the second electronic device that supports the Wi-Fi parameter negotiation capability in the neighboring devices. Alternatively, if the first electronic device does not find, in a local device list, an electronic device corresponding to the MAC address of the Wi-Fi interface, the first electronic device may send a query request to the AP device, the AP device performs a query, and the first electronic device receives a query result sent by the AP device, to obtain capability information of the second electronic device.

In this way, the first electronic device determines, by using the foregoing method, whether the second electronic device has the Wi-Fi parameter negotiation capability, to determine whether the second electronic device supports wireless projection and/or cross-device file sharing. Only after it is determined that the second electronic device supports the Wi-Fi parameter negotiation capability, the first electronic device requests to perform Wi-Fi parameter negotiation and establish a Wi-Fi communication channel.

In a possible implementation, the performing Wi-Fi parameter negotiation with the second electronic device if the second electronic device has the Wi-Fi parameter negotiation capability, to obtain a target radio frequency parameter includes: sending a Wi-Fi parameter negotiation request to the AP device, where the Wi-Fi parameter negotiation request carries an identifier of the second electronic device and a first radio frequency parameter, and the first radio frequency parameter includes an idle radio frequency band in a radio frequency band supported by the first electronic device and an idle channel in a channel supported by the first electronic device; and receiving a Wi-Fi parameter negotiation response that is sent by the second electronic device and forwarded by the AP device, where the Wi-Fi parameter negotiation response carries the target radio frequency parameter, and the target radio frequency parameter includes a target radio frequency band selected from the idle radio frequency band and a target channel selected from the idle channel by the second electronic device.

In some embodiments, if the first electronic device determines to establish a connection to the second electronic device, the first electronic device needs to negotiate a Wi-Fi channel connection parameter, to establish the Wi-Fi Direct channel, and the first electronic device needs to send a radio frequency parameter that is available and that is supported by the first electronic device to the second electronic device. However, to ensure network security, the AP device sets layer 2 isolation, and does not allow direct communication between the first electronic device and the second electronic device. Instead, the AP device forwards a signal between the first electronic device and the second electronic device, to implement permission and traffic audits on an electronic device that accesses an AP device network. Therefore, the first electronic device sends the available radio frequency parameter of the first electronic device to the AP device, and the AP device forwards the received radio frequency parameter to a corresponding target device (that is, the second electronic device) based on a target device identifier carried in the Wi-Fi parameter negotiation request.

In some embodiments, after receiving the first radio frequency parameter sent by the first electronic device, the second electronic device selects an optimal radio frequency band and an optimal channel as the target radio frequency parameter based on the first radio frequency parameter and a radio frequency parameter that is currently available and that is supported by the second electronic device. For example, the second electronic device selects a radio frequency band and a channel with best expected signal quality from radio frequency bands and channels that are available and that are supported by both the second electronic device and the first electronic device. For another example, the second electronic device selects a radio frequency band and a channel with a shortest delay from radio frequency bands and channels that are available and that are supported by both the second electronic device and the first electronic device.

In a possible implementation, the performing Wi-Fi parameter negotiation with the second electronic device if the second electronic device has the Wi-Fi parameter negotiation capability, to obtain a target radio frequency parameter includes: sending a Wi-Fi parameter negotiation request to the second electronic device, where the Wi-Fi parameter negotiation request carries a first radio frequency parameter, and the first radio frequency parameter includes an idle radio frequency band in a radio frequency band supported by the first electronic device and an idle channel in a channel supported by the first electronic device; and receiving a Wi-Fi parameter negotiation response sent by the second electronic device, where the Wi-Fi parameter negotiation response carries the target radio frequency parameter, and the target radio frequency parameter includes a target radio frequency band selected from the idle radio frequency band and a target channel selected from the idle channel by the second electronic device.

In some embodiments, the AP device does not set layer 2 isolation in the local area network, and the first electronic device and the second electronic device can directly communicate with each other. Therefore, in a process in which the first electronic device and the second electronic device perform Wi-Fi parameter negotiation, the AP device does not need to be used to forward a radio frequency parameter used for negotiation.

In a possible implementation, the establishing a Wi-Fi Direct channel with the second electronic device by using the target radio frequency parameter includes: sending a connection establishment request on the target radio frequency band and the target channel, where the connection establishment request requests to establish the Wi-Fi Direct channel with the second electronic device; and receiving a connection establishment response sent by the second electronic device, and completing establishment of the Wi-Fi Direct channel.

In some embodiments, after determining the target radio frequency parameter, the second electronic device creates a hotspot, uses the second electronic device as a soft access point (soft AP) device, and configures a radio frequency parameter of a radio frequency interface, so that the first electronic device can subsequently access the radio frequency interface, to transmit data. Further, the second electronic device serves as the soft AP device and sends, based on the target radio frequency parameter, a beacon (beacon) frame based on a preset period.

Correspondingly, after receiving the Wi-Fi parameter negotiation response, the first electronic device determines that the Wi-Fi parameter negotiation succeeds. The first electronic device sends, based on an 802.11 protocol, a probe request (probe request) management frame on the radio frequency band and the channel that are specified in the target radio frequency parameter that is determined through negotiation, to search for the beacon frame sent by the second electronic device. After the second electronic device is found, an authentication and association process is automatically triggered, and the Wi-Fi Direct channel is established with the second electronic device, to start transmission of data.

According to a second aspect, an embodiment of this application provides a connection establishment method, applied to a first electronic device. The method may include: sending a device query request to a wireless access point AP device in response to a first operation, where the device query request requests to query a device with a Wi-Fi parameter negotiation capability; receiving a device query response sent by the AP device, where the device query response carries a MAC address of a wireless fidelity Wi-Fi interface of a second electronic device, and the second electronic device has the Wi-Fi parameter negotiation capability; performing Wi-Fi parameter negotiation with the second electronic device by using the MAC address of the Wi-Fi interface, to obtain a target radio frequency parameter; and establishing a Wi-Fi Direct channel with the second electronic device by using the target radio frequency parameter.

In a possible implementation, before the sending a device query request to a wireless access point AP device in response to a first operation, the method further includes: sending a registration request to the AP device, where the registration request requests to register second capability information of the first electronic device, and the second capability information includes the Wi-Fi parameter negotiation capability.

In some implementations, the first electronic device and the second electronic device access a Wi-Fi network provided by a same AP device. After accessing the AP device, the first electronic device and the second electronic device directly register a capability supported by the first electronic device and the second electronic device, and interface information, such as Bluetooth interface information and Wi-Fi interface information, with the AP device. Subsequently, the first electronic device can directly query the AP device for a device with the Wi-Fi parameter negotiation capability and a MAC address of a Wi-Fi interface of the device.

In this way, without using NFC parameter information, the first electronic device may also obtain the MAC address of the Wi-Fi interface of the second electronic device, and directly establish the Wi-Fi Direct channel with the second electronic device based on the MAC address of the Wi-Fi interface, thereby improving link establishment performance and stability, and improving user experience.

In a possible implementation, the performing Wi-Fi parameter negotiation with the second electronic device by using the MAC address of the Wi-Fi interface, to obtain a target radio frequency parameter includes: sending a Wi-Fi parameter negotiation request to the AP device, where the Wi-Fi parameter negotiation request carries an identifier of the second electronic device and a first radio frequency parameter, and the first radio frequency parameter includes an idle radio frequency band in a radio frequency band supported by the first electronic device and an idle channel in a channel supported by the first electronic device; and receiving a Wi-Fi parameter negotiation response that is sent by the second electronic device and forwarded by the AP device, where the Wi-Fi parameter negotiation response carries the target radio frequency parameter, and the target radio frequency parameter includes a target radio frequency band selected from the idle radio frequency band and a target channel selected from the idle channel by the second electronic device.

In a possible implementation, the performing Wi-Fi parameter negotiation with the second electronic device by using the MAC address of the Wi-Fi interface, to obtain a target radio frequency parameter includes: sending a Wi-Fi parameter negotiation request to the second electronic device, where the Wi-Fi parameter negotiation request carries a first radio frequency parameter, and the first radio frequency parameter includes an idle radio frequency band in a radio frequency band supported by the first electronic device and an idle channel in a channel supported by the first electronic device; and receiving a Wi-Fi parameter negotiation response sent by the second electronic device, where the Wi-Fi parameter negotiation response carries the target radio frequency parameter, and the target radio frequency parameter includes a target radio frequency band selected from the idle radio frequency band and a target channel selected from the idle channel by the second electronic device.

In a possible implementation, the establishing a Wi-Fi Direct channel with the second electronic device by using the target radio frequency parameter includes: sending a connection establishment request on the target radio frequency band and the target channel, where the connection establishment request requests to establish the Wi-Fi Direct channel with the second electronic device; and receiving a connection establishment response sent by the second electronic device, and completing establishment of the Wi-Fi Direct channel.

In addition, for a technical effect of the connection establishment method in the second aspect, refer to the technical effect of the connection establishment method in the first aspect. Details are not described herein again.

According to a third aspect, an embodiment of this application provides an electronic device, including a processor and a memory, where the memory is coupled to the processor, the memory is configured to store computer program code, the computer program code includes computer instructions, and when the processor reads the computer instructions from the memory, the electronic device performs the following operations: obtaining a media access control MAC address of a wireless fidelity Wi-Fi interface of a second electronic device in a near field communication NFC tag of the second electronic device; querying, by using the MAC address of the Wi-Fi interface, whether the second electronic device has a Wi-Fi parameter negotiation capability; performing Wi-Fi parameter negotiation with the second electronic device if the second electronic device has the Wi-Fi parameter negotiation capability, to obtain a target radio frequency parameter; and establishing a Wi-Fi Direct channel with the second electronic device by using the target radio frequency parameter.

In a possible implementation, the first electronic device and the second electronic device access a Wi-Fi network provided by a same wireless access point AP device, and the querying, by using the MAC address of the Wi-Fi interface, whether the second electronic device has a Wi-Fi parameter negotiation capability includes: receiving device list information sent by the AP device, where the device list information includes capability information of an electronic device accessing the AP device; and querying, in the device list information, first capability information of the second electronic device corresponding to the MAC address of the Wi-Fi interface, and determining whether the first capability information includes the Wi-Fi parameter negotiation capability.

In a possible implementation, the first electronic device and the second electronic device access a Wi-Fi network provided by a same wireless access point AP device, and the querying, by using the MAC address of the Wi-Fi interface, whether the second electronic device has a Wi-Fi parameter negotiation capability includes: sending a capability query request to the AP device, where the capability query request carries the MAC address of the Wi-Fi interface, and the capability query request requests to query whether the second electronic device has the Wi-Fi parameter negotiation capability; and receiving a capability query response sent by the AP device, where the capability query response indicates whether the second electronic device has the Wi-Fi parameter negotiation capability.

In a possible implementation, when the processor reads the computer instructions from the memory, the electronic device further performs the following operation: sending a registration request to the AP device, where the registration request requests to register second capability information of the first electronic device, and the second capability information includes the Wi-Fi parameter negotiation capability.

In a possible implementation, the performing Wi-Fi parameter negotiation with the second electronic device if the second electronic device has the Wi-Fi parameter negotiation capability, to obtain a target radio frequency parameter includes: sending a Wi-Fi parameter negotiation request to the AP device, where the Wi-Fi parameter negotiation request carries an identifier of the second electronic device and a first radio frequency parameter, and the first radio frequency parameter includes an idle radio frequency band in a radio frequency band supported by the first electronic device and an idle channel in a channel supported by the first electronic device; and receiving a Wi-Fi parameter negotiation response that is sent by the second electronic device and forwarded by the AP device, where the Wi-Fi parameter negotiation response carries the target radio frequency parameter, and the target radio frequency parameter includes a target radio frequency band selected from the idle radio frequency band and a target channel selected from the idle channel by the second electronic device.

In a possible implementation, the performing Wi-Fi parameter negotiation with the second electronic device if the second electronic device has the Wi-Fi parameter negotiation capability, to obtain a target radio frequency parameter includes: sending a Wi-Fi parameter negotiation request to the second electronic device, where the Wi-Fi parameter negotiation request carries a first radio frequency parameter, and the first radio frequency parameter includes an idle radio frequency band in a radio frequency band supported by the first electronic device and an idle channel in a channel supported by the first electronic device; and receiving a Wi-Fi parameter negotiation response sent by the second electronic device, where the Wi-Fi parameter negotiation response carries the target radio frequency parameter, and the target radio frequency parameter includes a target radio frequency band selected from the idle radio frequency band and a target channel selected from the idle channel by the second electronic device.

In a possible implementation, the establishing a Wi-Fi Direct channel with the second electronic device by using the target radio frequency parameter includes: sending a connection establishment request on the target radio frequency band and the target channel, where the connection establishment request requests to establish the Wi-Fi Direct channel with the second electronic device; and receiving a connection establishment response sent by the second electronic device, and completing establishment of the Wi-Fi Direct channel.

In addition, for a technical effect of the electronic device in the third aspect, refer to the technical effect of the connection establishment method in the first aspect. Details are not described herein again.

According to a fourth aspect, an embodiment of this application provides an electronic device, including a processor and a memory, where the memory is coupled to the processor, the memory is configured to store computer program code, the computer program code includes computer instructions, and when the processor reads the computer instructions from the memory, the electronic device performs the following operations: sending a device query request to a wireless access point AP device in response to a first operation, where the device query request requests to query a device with a Wi-Fi parameter negotiation capability; receiving a device query response sent by the AP device, where the device query response carries a MAC address of a wireless fidelity Wi-Fi interface of a second electronic device, and the second electronic device has the Wi-Fi parameter negotiation capability; performing Wi-Fi parameter negotiation with the second electronic device by using the MAC address of the Wi-Fi interface, to obtain a target radio frequency parameter; and establishing a Wi-Fi Direct channel with the second electronic device by using the target radio frequency parameter.

In a possible implementation, when the processor reads the computer instructions from the memory, the electronic device further performs the following operation: sending a registration request to the AP device, where the registration request requests to register second capability information of the first electronic device, and the second capability information includes the Wi-Fi parameter negotiation capability.

In a possible implementation, the performing Wi-Fi parameter negotiation with the second electronic device by using the MAC address of the Wi-Fi interface, to obtain a target radio frequency parameter includes: sending a Wi-Fi parameter negotiation request to the AP device, where the Wi-Fi parameter negotiation request carries an identifier of the second electronic device and a first radio frequency parameter, and the first radio frequency parameter includes an idle radio frequency band in a radio frequency band supported by the first electronic device and an idle channel in a channel supported by the first electronic device; and receiving a Wi-Fi parameter negotiation response that is sent by the second electronic device and forwarded by the AP device, where the Wi-Fi parameter negotiation response carries the target radio frequency parameter, and the target radio frequency parameter includes a target radio frequency band selected from the idle radio frequency band and a target channel selected from the idle channel by the second electronic device.

In a possible implementation, the performing Wi-Fi parameter negotiation with the second electronic device by using the MAC address of the Wi-Fi interface, to obtain a target radio frequency parameter includes: sending a Wi-Fi parameter negotiation request to the second electronic device, where the Wi-Fi parameter negotiation request carries a first radio frequency parameter, and the first radio frequency parameter includes an idle radio frequency band in a radio frequency band supported by the first electronic device and an idle channel in a channel supported by the first electronic device; and receiving a Wi-Fi parameter negotiation response sent by the second electronic device, where the Wi-Fi parameter negotiation response carries the target radio frequency parameter, and the target radio frequency parameter includes a target radio frequency band selected from the idle radio frequency band and a target channel selected from the idle channel by the second electronic device.

In a possible implementation, the establishing a Wi-Fi Direct channel with the second electronic device by using the target radio frequency parameter includes: sending a connection establishment request on the target radio frequency band and the target channel, where the connection establishment request requests to establish the Wi-Fi Direct channel with the second electronic device; and receiving a connection establishment response sent by the second electronic device, and completing establishment of the Wi-Fi Direct channel.

In addition, for a technical effect of the electronic device in the fourth aspect, refer to the technical effect of the connection establishment method in the second aspect. Details are not described herein again.

According to a fifth aspect, an embodiment of this application provides an electronic device. The electronic device has a function of implementing the connection establishment method according to any one of the first aspect and the possible implementations of the first aspect; or the electronic device has a function of implementing the connection establishment method according to any one of the second aspect and the possible implementations of the second aspect. The function may be implemented by hardware, or may be implemented by hardware executing corresponding software. The hardware or the software includes one or more modules corresponding to the function.

According to a sixth aspect, an embodiment of this application provides a computer-readable storage medium, including computer instructions. When the computer instructions are run on an electronic device, the electronic device performs the connection establishment method according to any one of the first aspect and the possible implementations of the first aspect, or the electronic device performs the connection establishment method according to any one of the second aspect and the possible implementations of the second aspect.

According to a seventh aspect, an embodiment of this application provides a computer program product. When the computer program product runs on an electronic device, the electronic device performs the connection establishment method according to any one of the first aspect and the possible implementations of the first aspect, or the electronic device performs the connection establishment method according to any one of the second aspect and the possible implementations of the second aspect.

According to an eighth aspect, an embodiment of this application provides a circuit system. The circuit system includes a processing circuit. The processing circuit is configured to perform the connection establishment method according to any one of the first aspect and the possible implementations of the first aspect, or is configured to perform the connection establishment method according to any one of the second aspect and the possible implementations of the second aspect.

According to a ninth aspect, an embodiment of this application provides a chip system, including at least one processor and at least one interface circuit. The at least one interface circuit is configured to: perform a transceiver function, and send instructions to the at least one processor. When the at least one processor executes the instructions, the at least one processor performs the connection establishment method according to any one of the first aspect and the possible implementations of the first aspect; or the at least one processor performs the connection establishment method according to any one of the second aspect and the possible implementations of the second aspect.

### BRIEF DESCRIPTION OF DRAWINGS

FIG. 1 is a schematic diagram of a communication system according to an embodiment of this application;
FIG. 2 is a schematic diagram of a structure of an electronic device according to an embodiment of this application;
FIG. 3 is a schematic flowchart 1 of a data transmission method according to an embodiment of this application;
FIG. 4 is a schematic flowchart 2 of a data transmission method according to an embodiment of this application;
FIG. 5 is a schematic flowchart 3 of a data transmission method according to an embodiment of this application;
FIG. 6 is a schematic diagram of a handshake interaction procedure of a HiLink session according to an embodiment of this application;
FIG. 7 is a schematic flowchart 1 of a connection establishment method according to an embodiment of this application;
FIG. 8 is a schematic diagram of a packet format according to an embodiment of this application;
FIG. 9 is a schematic diagram 1 of an interface according to an embodiment of this application;
FIG. 10 is a schematic flowchart 2 of a connection establishment method according to an embodiment of this application;
FIG. 11 is a schematic flowchart 3 of a connection establishment method according to an embodiment of this application;
FIG. 12(a), FIG. 12(b) and FIG. 12(c) are a schematic diagram 2 of interfaces according to an embodiment of this application; and
FIG. 13 is a schematic diagram of a structure of a connection establishment apparatus according to an embodiment of this application.

### DESCRIPTION OF EMBODIMENTS

The following describes in detail a connection establishment method and an electronic device provided in embodiments of this application with reference to the accompanying drawings.

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "exemplary" or "for example" is used to represent giving an example, an illustration, or a description. Any embodiment or design scheme described as an "example" or "for example" in embodiments of this application should not be explained or having more advantages than another embodiment or design scheme. Exactly, use of the word "example", "for example", or the like, is intended to present a relative concept in a specific manner.

In the description of the embodiment of this application, unless otherwise stated, "multiple" means two or more than two. A term "and/or" in this specification describes only an association relationship between associated objects and indicates that there may be three relationships. For example, A and/or B may represent the following three cases: Only A exists, both A and B exist, and only B exists.

For ease of understanding, the following first describes related terms and concepts that may be used in embodiments of this application.

### (1) Huawei HiLink

Huawei HiLink is a smart hardware open ecosystem. Electronic devices can be added to a Huawei HiLink ecosystem through hardware access or cloud access to implement interconnection and interworking between the electronic devices.

In some embodiments, the HiLink ecosystem may also be described as an intelligent connected network, and the intelligent connected network includes a wireless access point (access point, AP) device configured to provide a wireless network, and at least one electronic device that accesses the AP device. The AP device is, for example, a HiLink^{®} router. The electronic device may also be described as an intelligent connected device. The electronic device can access the AP device based on a HiLink ecosystem-related protocol. The HiLink-related protocol includes, for example, a constrained application protocol (constrained application protocol, CoAP) and a universal plug and play (universal plug and play, UPnP) protocol.

Further, the HiLink ecosystem-related protocol can be used in a smart discovery process and a network configuration process. For example, in a Hlink network, a HiLink router can broadcast, based on a HiLink ecosystem-related protocol, a function supported by an accessed electronic device, so that another electronic device can discover an electronic device with a required function. If an electronic device 1 needs to perform wireless projection, the electronic device 1 receives a broadcast signal, and finds that the electronic device 2 supports a wireless projection function. In this way, the electronic device 1 may request to establish a connection to the electronic device 2, to implement wireless projection. In addition, the HiLink router can further configure a network of the accessed electronic device, and a router that supports network configuration may serve as an intelligent gateway device in the intelligent connected network.

It should be noted that in embodiments of this application, a HiLink ecosystem is used as an example to describe a connection establishment method provided in embodiments of this application. The connection establishment method may be further applied to another ecosystem that supports intelligent connection, for example, a Xiaomi ecological chain.

### (2) Near field communication (near field communication, NFC) function

The NFC function can implement peer to peer communication between electronic devices based on a short-distance wireless communication technology. For example, two devices with an NFC function are connected to implement peer to peer data transmission. Further, the NFC function may further assist electronic devices in quickly establishing a Bluetooth (Bluetooth, BT) connection, exchanging business cards, and performing data communication.

In some embodiments, an electronic device with the NFC function may further store some information of the electronic device in an NFC module, and exchange information of the NFC module by using a "tap to transfer" function. For example, merchant information is preset in the NFC module, and the electronic device can implement quick payment by approaching an NFC sensing area. For another example, two electronic devices obtain an NFC tag in an NFC module of each other by using tap to transfer. For example, the NFC tag includes parameter information such as a preset Bluetooth socket (socket) address, so that the electronic device can establish Bluetooth communication based on the Bluetooth socket address.

### (3) Wi-Fi peer to peer (Peer to Peer, P2P)

Wi-Fi P2P is proposed by the Wi-Fi Alliance to define how two Wi-Fi electronic devices connect to and communicate with each other without a route. Specifically, electronic devices supporting Wi-Fi P2P form a peer to peer working group (P2P group), including a peer to peer working group owner (P2P group owner) and a peer to peer client (P2P client). An electronic device serving as the P2P group owner needs to have a conventional routing function, for example, can serve as a soft AP (soft AP) device to control communication of another electronic device (P2P client) in the Wi-Fi P2P working group. An electronic device serving as a P2P working group client (group client, GC) needs to be connected to the electronic device serving as the P2P group owner, to form a working group that can perform communication.

For example, a process of discovering and constructing a working group by a P2P electronic device includes a scan phase (scan phase) and a find phase (find phase). Specifically, in the scan phase, the electronic device sends a probe request (probe request) frame. Then, the electronic device enters the find phase. In the find phase, the electronic device switches between a search state (search state) of sending the probe request frame and a listen state (listen state) of listening to the probe request frame and sending a probe response (probe response) frame, until a nearby P2P device is scanned, and a P2P working group is constructed. A process of establishing the P2P working group further includes a process of negotiating and determining an electronic device serving as a P2P group owner, and a process of exchanging security configuration information between electronic devices.

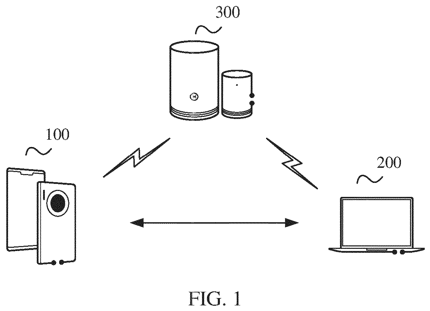

FIG. 1 is a schematic diagram of a communication system to which a connection establishment method is applied according to an embodiment of this application. As shown in FIG. 1, the communication system includes a first electronic device 100, a second electronic device 200, and a wireless access point (access point, AP) device 300. The first electronic device 100 and the second electronic device 200 access a wireless network provided by the AP device 300.

Optionally, the first electronic device 100 may be a terminal device, for example, a personal computer (personal computer, PC), a mobile phone (mobile phone), a tablet computer (Pad), a notebook computer, a desktop computer, a notebook computer, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable device, and an in-vehicle device. A specific form of the first electronic device 100 is not particularly limited in embodiments of this application.

Optionally, the second electronic device 200 may be a terminal device, for example, a PC, a mobile phone, a tablet computer, a notebook computer, a desktop computer, a notebook computer, a VR terminal device, an AR terminal device, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, a wearable device, and an in-vehicle device. A specific form of the second electronic device 200 is not particularly limited in embodiments of this application.

In some embodiments, wireless projection and file sharing can be implemented between the first electronic device 100 and the second electronic device 200 by using a wireless communication technology. It is assumed that the first electronic device 100 is a source device, and the second electronic device 200 is a target device. The first electronic device 100 performs wireless projection by using the second electronic device 200. Alternatively, the first electronic device 100 sends files of a plurality of types and/or formats to the second electronic device 200 for sharing. For example, the first electronic device 100 sends a video file to the second electronic device 200 for sharing.

Optionally, the AP device 300 may be, for example, a wireless router, configured to provide a Wi-Fi network. The first electronic device 100 and the second electronic device 200 access the Wi-Fi network provided by the AP device 300, and the AP device 300 can forward signals sent by the first electronic device 100 and the second electronic device 200. In some embodiments, the AP device 300 is, for example, a HiLink router, and the first electronic device 100 and the second electronic device 200 are intelligent connected devices that access the HiLink router. In this embodiment of this application, a HiLink ecosystem-related protocol that supports smart discovery and network configuration is used as an example to describe the connection establishment method. It may be understood that the connection establishment method provided in this embodiment of this application is also applicable to another standard protocol or proprietary protocol that supports smart discovery and network configuration.

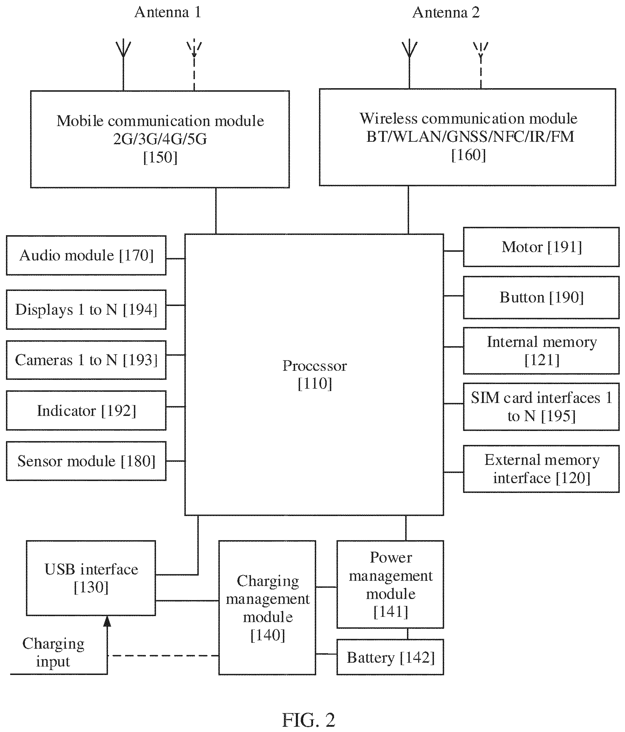

Optionally, the first electronic device 100 and the second electronic device 200 in this embodiment of this application may be implemented by a different device. For example, the first electronic device 100 and the second electronic device in this embodiment of this application may be implemented by using an electronic device in FIG. 2.

FIG. 2 shows a schematic diagram of a structure of the electronic device. The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device. In some other embodiments of this application, the electronic device may include more or fewer components than those shown in the figure, or combine some components, or split some components, or have a different component arrangement. The components shown in the figure may be implemented by hardware, software, or a combination of software and hardware. For example, if the electronic device is the second electronic device 200, and the second electronic device 200 is a PC, a structure of the second device 200 may not include the mobile communication module 150, the motor 191, the SIM card interface 195, or the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction executing.

A memory may be further disposed in the processor 110, and is configured to store instructions and data. In some embodiments, the memory in the processor 110 is a cache. The memory may store an instruction or data that is just used or cyclically used by the processor 110. If the processor 110 needs to use the instruction or the data again, the processor may directly invoke the instruction or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that, an interface connection relationship between the modules shown in this embodiment of this application is only an example for description, and does not constitute a limitation on the structure of the electronic device. In some other embodiments of this application, the electronic device may alternatively use an interface connection manner different from that in this embodiment, or a combination of a plurality of interface connection manners.

The charging management module 140 is configured to receive charging input from a charger. The charger may be a wireless charger or a wired charger. In some embodiments of wired charging, the charging management module 140 may receive a charging input of a wired charger through the USB interface 130.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a solution that includes wireless communication such as 2G/3G/4G/5G and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same component as at least some modules in the processor 110.

In some embodiments, the electronic device implements peer to peer data transmission by using NFC. For example, an electronic device 1 enables an NFC function, and is close to an NFC sensing area of an electronic device 2, so that a file can be quickly shared to the electronic device 2.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device. The wireless communication module 160 may be one or more components integrating at least one communication processing module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 194, where N is a positive integer greater than 1.

In some embodiments, if the display of the electronic device is small, the wireless communication module 160 may be connected to another large-screen electronic device, and display content is sent, based on a wireless projection technology, to the large-screen electronic device for display.

The electronic device may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and a skin color of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193, where N is a positive integer greater than 1.

The external memory interface 120 may be configured to be connected to an external storage card, for example, a micro SD card, to extend a storage capability of the electronic device. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and a phone book) created when the electronic device is used, and the like. In addition, the internal memory 121 may include a high speed random access memory, or may include a nonvolatile memory, for example, at least one magnetic disk storage device, a flash storage device, or a universal flash storage (universal flash storage, UFS). The processor 110 runs the instructions stored in the internal memory 121 and/or the instructions stored in the memory disposed in the processor, to execute various function applications of the electronic device and data processing.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules in the audio module 170 are disposed in the processor 110. The audio module may include a speaker, a receiver, a microphone, and a headset interface. In some embodiments, the electronic device may implement an audio function such as music playing or recording by using the audio module 170, the speaker, the receiver, the microphone, the headset jack, the application processor, and the like.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like. In some embodiments, the pressure sensor may be disposed on the display 194. When a touch operation is performed on the display 194, the electronic device may calculate a touch location based on a detection signal of the pressure sensor.

The button 190 includes a power-on button, a volume button, and the like. The button 190 may be a mechanical button, or may be a touch button. The electronic device may receive a button input, and generate a button signal input related to user settings and function control of the electronic device.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects.

The indicator 192 may be an indicator light, and may be configured to indicate a charging status and a power change, or may be configured to indicate a message, a missed call, a notification, or the like.

The SIM card interface 195 is configured to connect to a SIM card. The SIM card may be inserted into the SIM card interface 195 or removed from the SIM card interface 195, to implement contact with or separation from the electronic device. The electronic device may support one or N SIM card interfaces, where N is a positive integer greater than 1. The electronic device interacts with a network by using the SIM card, to implement functions such as calling and data communication.

The following describes a connection establishment method provided in an embodiment of this application by using an example in which the first electronic device 100 is a mobile phone with the structure shown in FIG. 2, the second electronic device 200 is a PC with the structure shown in FIG. 2, and the AP device 300 is a router providing a Wi-Fi network.

In some embodiments, the mobile phone and the PC can implement data transmission by using a wireless communication technology, for example, data transmission in a scenario such as a wireless projection scenario, an audio file sharing scenario, or a video file sharing scenario. For example, a mobile phone and a PC are connected through a wireless local area network through a standard protocol or a proprietary protocol such as Miracast, a digital living network alliance (digital living network alliance, DLNA), and AirPlay^{®} (a wireless communication technology formulated by Apple), and perform operations such as transmission and display of multimedia (such as audio, video, and picture) content on different multimedia terminals.

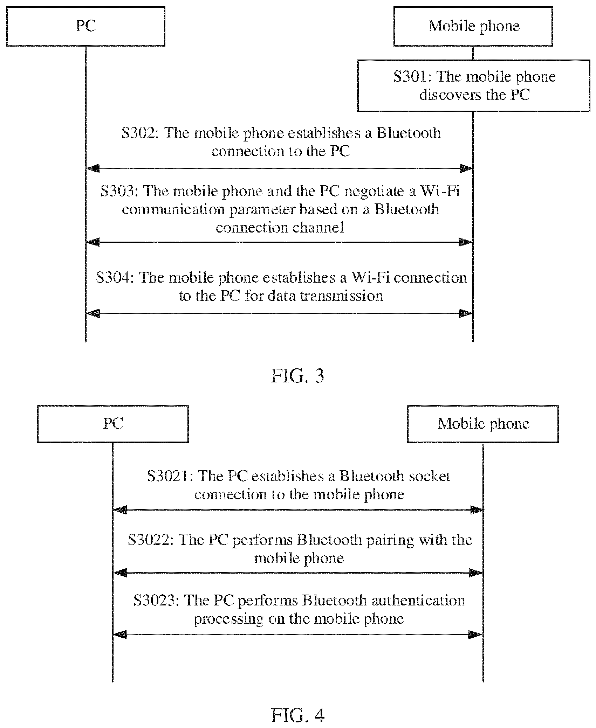

For example, as shown in FIG. 3, a current method for wireless data transmission between the mobile phone and the PC includes S301 to S304.

S301: The mobile phone discovers the PC.

For example, the mobile phone and the PC generally support one or more of an NFC tap to transfer detection function, a proximity detection function based on Bluetooth, and an 802.11 protocol-based proximity detection function. For example, the mobile phone and the PC enable a wireless local area network (wireless local area network, WLAN) function and a Bluetooth function, and the PC enables an application used to perform computer management, such as PC Manager. After the mobile phone touches an NFC sensing area on the PC, the mobile phone and the PC discover each other, and the mobile phone and the PC establish a Wi-Fi connection by performing the following step S302 to step S304. Alternatively, after the mobile phone touches an NFC sensing area on the PC, the mobile phone and the PC discover each other, and the mobile phone pops up a window to prompt the user whether to establish a connection to the PC and/or the PC pops up a window to prompt the user whether to establish a connection to the mobile phone. After detecting an operation of tapping the "Confirm" by the user, a Wi-Fi connection is established between the mobile phone and the PC by performing the following step S302 to step S304.

S302: The mobile phone and the PC establish a Bluetooth connection.

Specifically, in a process in which the mobile phone and the PC establish the Wi-Fi connection, the Bluetooth connection first needs to be established, so that the Wi-Fi connection can be subsequently established based on a Bluetooth connection channel.

For example, as shown in FIG. 4, step S302 may be specifically performed as step S3021 to step S3023.

S3021: The PC and the mobile phone establish a Bluetooth socket connection.

In some embodiments, in the foregoing step S301, the mobile phone and the PC can obtain a media access control (media access control, MAC) address of a Bluetooth module in an NFC tag of each other after using tap to transfer, to determine peer devices of a Bluetooth communication connection required for establishing the Bluetooth socket connection. Then, the Bluetooth socket connection is established, and a Bluetooth module of the mobile phone and a Bluetooth module of the PC are triggered to establish the Bluetooth communication connection. In a process of establishing the Bluetooth communication connection, configuration information is exchanged based on protocols such as a logical link control and adaptation protocol (Logical Link Control and Adaptation Protocol, L2CAP) and an RFCOMM protocol, to establish a protocol communication link.

S3022: The PC performs Bluetooth pairing with the mobile phone.

S3023: The PC performs Bluetooth authentication processing on the mobile phone.

In some embodiments, after establishing the socket connection, the mobile phone and the PC cannot directly exchange data, and need to perform a pairing and authentication procedure, for example, perform pairing permission and key configuration, so that the other party serves as a trusted device. Then, the mobile phone and the PC can transmit data to each other. The key configuration is an optional step. If password verification is not required, the key configuration is not required.

S303: The mobile phone and the PC negotiate a Wi-Fi communication parameter based on the Bluetooth connection channel.

For example, after the mobile phone and the PC establish the Bluetooth connection through negotiation in step S302, a Bluetooth connection session channel of layer 2 network communication can be provided for Wi-Fi to perform a socket connection.

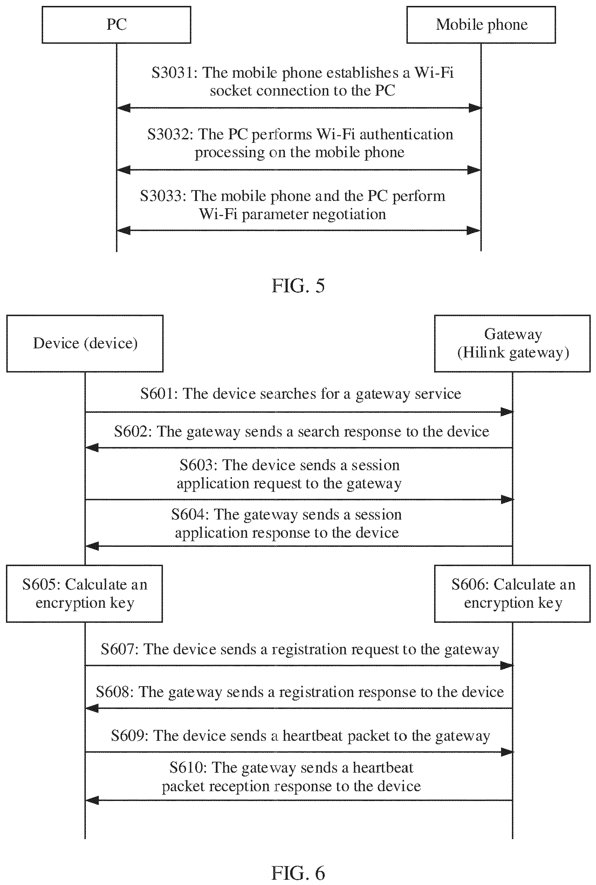

As shown in FIG. 5, step S303 may be specifically implemented as step S3031 to step S3033.

S3031: The mobile phone and the PC establish a Wi-Fi socket connection.

In some embodiments, after establishing the Bluetooth connection, the mobile phone and the PC can negotiate or obtain Wi-Fi hotspot parameter information of a peer end to perform the Wi-Fi socket connection.

S3032: The PC performs Wi-Fi authentication processing on the mobile phone.

In some embodiments, after establishing the Wi-Fi socket connection, the mobile phone and the PC also need to execute an authentication procedure, to set the peer device as a trusted device, and confirm that a current Wi-Fi socket session is secure.

S3033: The mobile phone and the PC perform Wi-Fi parameter negotiation.

In some embodiments, after establishing the secure socket session based on a Bluetooth session, the mobile phone and the PC start to negotiate a Wi-Fi P2P group parameter. Specifically, the mobile phone sends information about currently available radio frequency bands and a list of channels that are supported by the mobile phone to the PC. The PC selects a proper radio frequency band and channel, creates a P2P soft AP, and sets a role of the PC as a group owner.

S304: The mobile phone and the PC establish the Wi-Fi connection for data transmission.

In some embodiments, after the mobile phone and the PC form the Wi-Fi P2P working group, the mobile phone and the PC can perform data exchange based on a Wi-Fi service channel, for example, process service data flow and control information flow in a wireless projection process or an audio and video file sharing process.

It can be learned that currently, the mobile phone and the PC need to establish the Bluetooth connection first, and then can establish the Wi-Fi P2P working group based on the Bluetooth connection by exchanging a Wi-Fi parameter. However, because Bluetooth link establishment is poor in pairing performance and stability, and a bandwidth of transmitted data is limited, a link establishment delay is long, and a user waits for a long time, affecting user experience.

Based on this, an embodiment of this application provides a connection establishment method. After accessing a Wi-Fi network provided by a same AP device, a mobile phone and a PC can directly exchange a Wi-Fi parameter based on the Wi-Fi network, and can create a Wi-Fi P2P working group, to implement data exchange. Therefore, a problem of a long delay caused by a Bluetooth connection is avoided.

The following uses a wireless projection scenario as an example to describe the connection establishment method provided in this embodiment of this application. The mobile phone and PC are connected to a router. The router serves as a HiLink gateway (gateway), and the mobile phone and PC serve as HiLink devices (device).

In some embodiments, after accessing a Wi-Fi network provided by a HiLink router, the mobile phone and the PC automatically perform HiLink pairing. The HiLink router can obtain device information of the mobile phone and PC through a HiLink-related protocol. The HiLink-related protocol includes, for example, a constrained application protocol (constrained application protocol, CoAP) and a universal plug and play (universal plug and play, UPnP) protocol. The device information includes, for example, a media access control (media access control address, MAC) address, a device name, a device type, a device manufacturer identifier, a service capability set, and the like. The service capability set includes, for example, network configuration synchronization and Wi-Fi hotspot parameter negotiation. The Wi-Fi hotspot parameter negotiation capability indicates a capability of a device to support a WLAN channel, and a capability of synchronizing and negotiating a service set identifier (service set identifier, SSID) parameter and Wi-Fi radio frequency parameters such as a radio frequency band and a channel list that are supported by a Wi-Fi P2P group client (GC). It should be noted that the Wi-Fi hotspot parameter negotiation capability may be used to support, for example, services such as wireless projection and file sharing.

For example, as shown in FIG. 6, FIG. 6 is a schematic diagram of a handshake interaction procedure in which a device accesses a HiLink gateway and establishes a HiLink session with the HiLink gateway. The device is a mobile phone or a PC. The following steps are described by using an interaction process between the mobile phone and a router as an example.

S601: The device searches for a gateway service.

Specifically, after the mobile phone is powered on, that is, when the mobile phone is powered on and is to access a wireless network, the mobile phone performs network search to search for an accessible gateway device. An example in which the accessed gateway is a smart gateway such as a HiLink gateway is used for description.

For example, the mobile phone broadcasts a packet "GET/.well-known/core? st=home Center". The "st" field indicates a filtering condition. For example, the "st=home Center" field is used to search for a smart gateway device.

S602: The gateway sends a search response to the device.

Specifically, after receiving a packet for searching for a gateway device, the router sends a response packet to the mobile phone, to notify the mobile phone that the router is the gateway device.

For example, the following shows an example of the response packet.

```
          2.05 Content
          {
          "errcode":0,
          "dev Id":"2323-1221-... ",
          "dev Info": {
           "sn":"00E0FC018008",
           "mode 1":"SmartWiFiRouter",
           "dev Type":"004",
           "manu":"002",
           "prod Id": "0000b",
           "hiv":"VER.C",
           "swv":"V100R001C01B010",
           "prot Type":1
          },
          "services":[{
           "st":"home Center",
           "sid":"home Center"
          }]
          }
 
```

S603: The device sends a session application request to the gateway.

Specifically, after receiving the response packet sent by the router, the mobile phone determines that the router is a HiLink gateway device that provides a Wi-Fi network, and sends a session application request to the router, where the session application request is used to exchange device information, to access the Wi-Fi network.

For example, the following shows an example of a session application request packet.

```
          POST/.sys/ses sMngr
          {
           "type":1
           "mode Support":1
           "sn1":"1213123123",
           "seq":56
          }
```

S604: The gateway sends a session application response to the device.

Specifically, after receiving the session application request packet, the router sends a session application response packet to the mobile phone, to establish a session channel.

For example, the following shows an example of a session application response packet.

```
          2.05 Content
          {
           "errcode":0,
           "sess Id":"232384789843",
           "sn2":"2392984389",
           "mode Resp": 1,
           "seq":78,
          }
```

S605: The device calculates an encryption key.

S606: The gateway calculates an encryption key.

Specifically, in step S605 and step S606, to ensure session security, the mobile phone and the router need to separately calculate an encryption key. For example, the pre-shared key (pre-shared key, PSK) mode is used to calculate the encryption key, for example, enc_key=PBKDF2(PSK,sn1|sn2), where sn indicates a product serial number (serial number, SN), and the SN code is a unique identifier corresponding to the device.

S607: The device sends a registration request to the gateway.

Specifically, the mobile phone sends the registration request to the gateway device, to register device information. Then, the router invokes a corresponding device based on the device information. Optionally, a conventional HiLink interface is extended to register the device information. For example, a Wi-Fi P2P parameter negotiation interface is extended.

For example, the following shows an example of a registration request packet.

```
          POST /homeCenter
          aes({
            "devId": "",
            "devInfo": {
              "sn": "00E0FC018008",
              "model": "SmartMobilePhone",
              "devType": "004",
              "manu": "002",
              "prodId": "000b",
              "mac": "",
              "hiv": "1.0",
          "fwv": "10.01",
              "hwv": "VER.C",
              "swv": "V100R001C01B010",
              "protType": 1
          },
            "services": [{
              "st": "WifiCfg",
            }],
          "timeflg": 1
          })
```

In the foregoing registration request packet, the "st" field indicates a filtering condition, for example, a service capability set supported by the device. The "WifiCfg" field indicates that the device has a Wi-Fi hotspot parameter negotiation capability, that is, the mobile phone supports Wi-Fi parameter synchronization and negotiation. In this case, the router can subsequently assist the mobile phone and a PC in Wi-Fi parameter synchronization and negotiation based on the Wi-Fi hotspot parameter negotiation capability of the mobile phone, thereby implementing wireless projection.

S608: The gateway sends a registration response to the device.

Specifically, after receiving the registration request packet, the router sends a registration response packet to the mobile phone, to complete registration of the device information of the mobile phone.

For example, the following shows an example of the registration response packet.

```
          2.05 Content
          aes({
           "errcode":0
          }
```

S609: The device sends a heartbeat packet to the gateway.

Specifically, the mobile phone and the router are connected based on a socket connection. If the socket connection is disconnected, data transmission between the mobile phone and the router fails. Therefore, the router needs to ensure that the socket connection is not disconnected. Based on this, the mobile phone periodically sends a heartbeat packet to the router, to notify the router that the mobile phone is currently online, to ensure validity of a connection between the mobile phone and the router.

For example, the following shows an example of the heartbeat packet packet.
POST/.sys/heartbeat?devSn=***

S610: The gateway sends a heartbeat packet reception response to the device.

Specifically, after receiving the heartbeat packet, the router determines that the mobile phone is online, and sends a heartbeat packet reception response, to notify the mobile phone that the router is currently online.

For example, the following shows an example of a heartbeat packet reception response packet.

```
          2.05Content
          aes({
           "errcode":0
          }
```

In some scenarios, the mobile phone and the PC access, by using the method shown in FIG. 6, the Wi-Fi network provided by the same router, and after a HiLink session channel is established with the router, a Wi-Fi P2P working group may be established for data transmission.

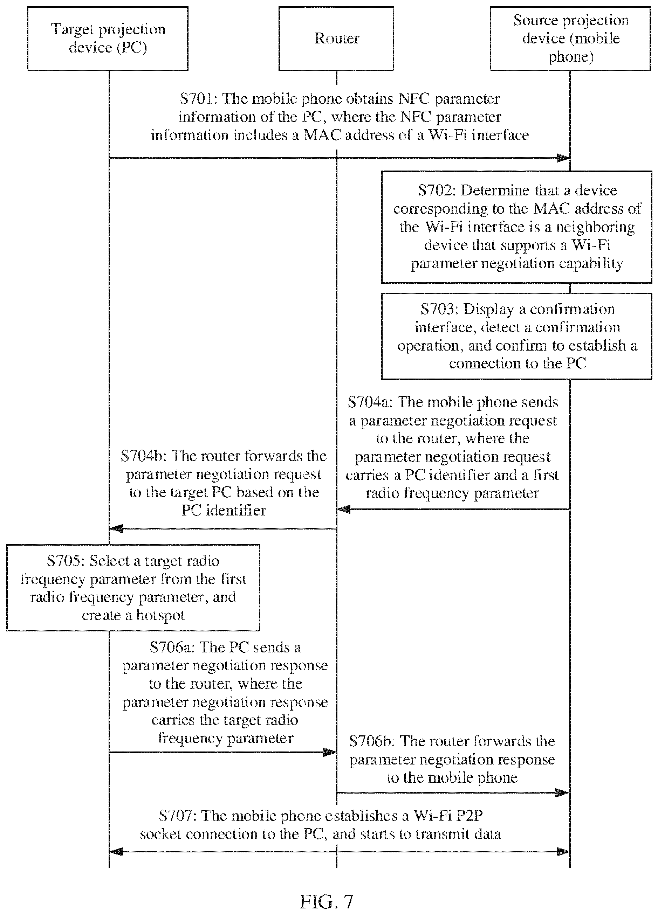

For example, FIG. 7 is a schematic flowchart of a connection establishment method according to an embodiment of this application. A projection source device is a mobile phone, a projection target device is a PC, and the mobile phone displays a video image by using the PC. Refer to FIG. 7. The method includes the following S701 to S707.

S701: The mobile phone obtains NFC parameter information of the PC, where the NFC parameter information includes a MAC address of a Wi-Fi interface.

In some embodiments, the PC includes a radio frequency identification (radio frequency identification, RFID) module. The mobile phone enables an NFC function, approaches an NFC sensing area of the PC, and may read the NFC parameter information of the PC, for example, parameter information in an NFC tag, to obtain the MAC address of the Wi-Fi interface of the PC. The MAC address of the Wi-Fi interface in the NFC parameter information may be preconfigured in the NFC tag of the PC. Alternatively, when the PC is powered on and starts an application to activate the Wi-Fi interface, the MAC address of the Wi-Fi interface is written into the NFC tag.

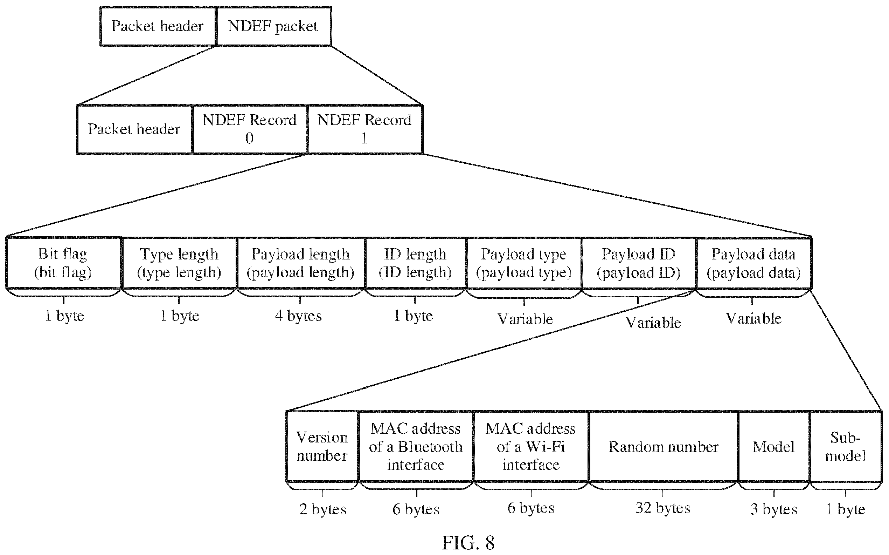

For example, data in the NFC tag is stored in an NFC data exchange format (NFC data exchange format, NDEF) packet (message) form. Each packet may include a plurality of records (Records) (or may be described as a plurality of sub-packets). For example, as shown in FIG. 8, a packet format is provided as an example. An NDEF packet includes a packet header sub-packet, an NDEF Record 0 sub-packet, and an NDEF Record 1 sub-packet.

The NDEF Record 0 sub-packet is used to store a uniform resource locator (uniform resource locator, URL) system. The URL may be used to open a website of an application that currently uses an NFC function, to obtain an introduction to the application. For example, it is assumed that the mobile phone touches the NFC sensing area of the PC to transmit data, and the mobile phone does not support a "Huawei Share OneHop" function. The URL points to a website that introduces the Huawei Share OneHop function. When the mobile phone touches the NFC sensing area of the PC, the mobile phone displays the corresponding website by using the URL, so that a user can view a related introduction.

NDEF Record 1 sub-packet is used to store the NFC parameter information. As shown in FIG. 8, the NDEF Record 1 sub-packet includes a bit flag (bit flag) field, a type length (type length) field, a payload length (payload length) field, an ID length (ID length) field, a payload type (payload type) field, a payload ID (payload ID) field, and a payload data (payload data) field.

A quantity of bytes occupied by the payload data field is a variable, and may change based on a subfield data length. The payload data field includes a version number subfield, a Bluetooth interface MAC address subfield, a Wi-Fi interface MAC address subfield, a random number subfield, a model subfield, and a sub-model subfield.

The Bluetooth interface MAC address subfield occupies six bytes (bytes), and indicates a MAC address of a Bluetooth interface of the PC. The mobile phone can establish a Bluetooth connection with the PC based on the MAC address.

The Wi-Fi interface MAC address subfield occupies 6 bytes, and indicates a MAC address of a Wi-Fi interface of the PC. The mobile phone can establish a Wi-Fi connection with the PC based on the MAC address. In this way, an NFC tag is extended, and the MAC address of the Wi-Fi interface is directly indicated in the NFC parameter information, so that the mobile phone and the PC can establish the Wi-Fi connection without needing to establish the Bluetooth connection, but can directly establish the Wi-Fi connection based on the MAC address of the Wi-Fi interface.

The random number subfield occupies 32 bytes, and a value of this field is a hash value obtained after a hash operation is performed based on a product serial number (serial number, SN) of the PC. The SN number is an identity code of the PC and is a unique machine code of the PC.

S702: The mobile phone determines that a device corresponding to the MAC address of the Wi-Fi interface is a neighboring device that supports a Wi-Fi parameter negotiation capability.

In some embodiments, the router broadcasts, according to a local security policy, device information registered by an accessed device in a registration process, and synchronizes the device information to each device connected to a local area network. In this way, after listening to the broadcast, the mobile phone may store information about a list of devices accessing the router, and can discover neighboring devices in the local area network based on the information about the list of devices. In this way, after the MAC address of the Wi-Fi interface is received, the PC that supports the Wi-Fi parameter negotiation capability in the neighboring devices can be discovered. Optionally, the Wi-Fi parameter negotiation capability includes, for example, a Wi-Fi hotspot parameter negotiation capability.

In some embodiments, after obtaining the MAC address Wi-Fi interface of the PC, the mobile phone needs to determine whether the PC is a device that supports the Wi-Fi hotspot parameter negotiation capability. A PC device that has the Wi-Fi hotspot parameter negotiation capability can perform wireless projection and/or cross-device file sharing between the mobile phone and the PC. The mobile phone may query, by using locally cached device list information, whether a device corresponding to the MAC address of the Wi-Fi interface supports the Wi-Fi hotspot parameter negotiation capability. If the mobile phone does not find the device corresponding to the MAC address of the Wi-Fi interface in a local device list, the mobile phone may send a query request to the router, the router performs query, and the mobile phone receives a query result sent by the router.

For example, the mobile phone may send a query request packet to the router, to query the router for a specified device identifier, a specified MAC address, or a list of devices with a specified capability.

For example, the query request packet is, for example, "GET /cord?st= WifiCfg". The "st" field indicates a filtering condition, and the "WiFiCfg" field instructs to query a device with the Wi-Fi hotspot parameter negotiation capability. Specifically, if the device supports wireless projection and/or cross-device file sharing, the device needs to support the Wi-Fi hotspot parameter negotiation capability. Therefore, a device that supports the projection capability may be queried by using the packet.

Correspondingly, after receiving the query request packet, the router sends a query response packet to the mobile phone, where the query response packet carries the query result. The following shows an example of the query response packet.

```
          [{
              "devId": "",
            "devInfo": {
                "sn": "00E0FC018008",
                "model": "SmartSpeaker",
              "devType": "004",
              "manu": "002",
              "prodId": "000b",
              "hiv": "1.0",
          "fwv": "10.01",
              "hwv": "VER.C",
              "swv": "V100R001C01B010",
              "protType": 1
          },
            "services": [{
                "st": "WifiCfg",
              "sid": "WifiCfg01"
            }],
          "modeSupport": 3,
            "url": "https://192.168.1.2:3561"
          }]
```

In the query response packet, the "sn" field indicates an SN number of the device with the Wi-Fi hotspot parameter negotiation capability, for example, 00E0FC018008. The mobile phone can determine a corresponding device based on the SN number. Further, the SN number field may be further filled with a MAC address, and the MAC address may also indicate a unique corresponding device.

It should be noted that, in step S701, the mobile phone may further obtain the MAC address of the Bluetooth interface included in the NFC parameter information of the PC. In step S702, if a process of querying, by the mobile phone and the router, a neighboring device that supports the Wi-Fi hotspot parameter negotiation capability fails, that is, the mobile phone and the router does not find the corresponding PC, the mobile phone establishes the Bluetooth connection to the PC by using the MAC address of the Bluetooth interface, and then establishes a Wi-Fi P2P working group. For establishing the Wi-Fi P2P working group based on the Bluetooth connection, refer to the methods shown in FIG. 3 to FIG. 5. Details are not described herein again.

S703: The mobile phone displays a confirmation interface, detects a confirmation operation, and confirms to establish a connection to the PC.

In some embodiments, after the mobile phone finds the PC that can be used for projection by performing step S702, the user needs to confirm whether the PC is the target projection device. If the PC is the target projection device, the following projection parameter negotiation process is performed. If the PC is not the target projection device, the foregoing step S701 and step S702 need to be repeated to search for the PC again, or a projection operation is cancelled.

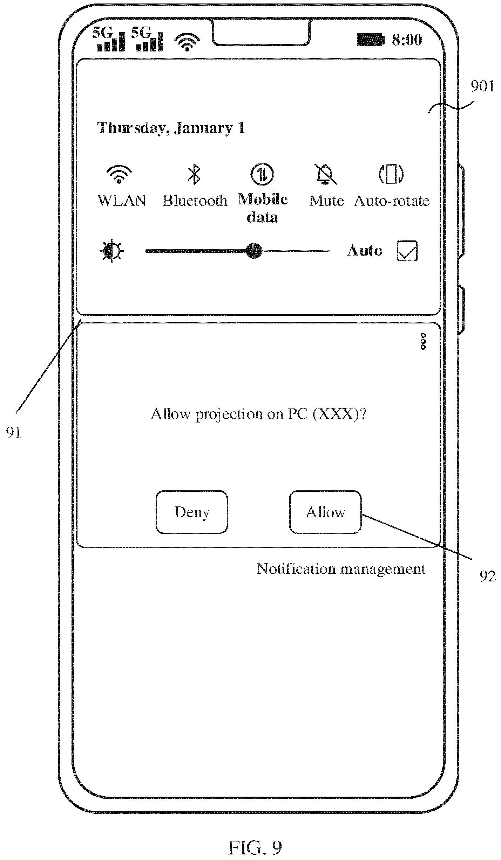

For example, in an interface 901 shown in FIG. 9, the mobile phone displays a notification bar 91, to prompt the user that a projection connection is currently being established, and the user determines whether to allow projection on the PC. There may be a plurality of PCs currently. In this case, a manner such as an SN code of a PC or a user-defined PC name may be used to prompt the user that the target PC to be connected is a specific PC in the plurality of PCs, so that the user can distinguish the PCs. For example, in "PC (XXX)" displayed on the interface 901, XXX indicates content corresponding to a prompt manner. If an operation of tapping a control 92 by the user is detected and it is confirmed that the user allows using the target PC to perform projection, a projection connection needs to be established between the mobile phone and the target PC, to transmit projection data.

S704a: The mobile phone sends a parameter negotiation request to the router, where the parameter negotiation request carries a PC identifier and a first radio frequency parameter.

The first radio frequency parameter includes a radio frequency band and a channel that can be currently used in a radio frequency band and a channel that are supported by the mobile phone. The PC identifier includes, for example, a MAC address of the PC, or a predefined PC identifier. The router determines, based on the PC identifier, the target PC to which the parameter negotiation request is sent, and subsequently the mobile phone performs wireless projection by using the target PC. Optionally, the mobile phone is used as a projection source device, and the PC is used as the projection target device. The parameter negotiation request carries a target device identifier and/or a source device identifier, which are used to identify a peer device.

In some embodiments, if the mobile phone determines to establish a connection to the PC, the mobile phone needs to negotiate a Wi-Fi P2P connection parameter to establish a Wi-Fi P2P working group, and the mobile phone needs to send a radio frequency parameter that is available and that is supported by the mobile phone to the PC. However, to ensure network security, the router sets layer 2 isolation, and does not allow direct communication between mobile phone and the PC. Instead, the router forwards a signal between mobile phone and the PC, to audit a right and traffic of a device that accesses a router network. Therefore, the mobile phone sends the radio frequency parameter that is available and that is supported by the mobile phone to the router, and the router forwards the received radio frequency parameter to the corresponding target PC based on the target PC identifier carried in the parameter negotiation request. Then, the target PC selects, based on the radio frequency parameter, a radio frequency parameter that needs to be applied.

For example, the request packet is as follows:

```
          METHOD PATH HTTP/1.1
          [BODY]
```

In the foregoing request packet, the "METHOD" field indicates a method for transmitting an interface parameter, for example, including two methods: GET and POST. In the GET method, a parameter is transmitted through a unified resource locator (uniform resource locator, URL) system. In the POST method, a parameter is placed in a packet body (body) for transmission. Optionally, the GET method and the POST method may be based on the hypertext transfer protocol (hypertext transfer protocol, HTTP) for transmission of a transmission control protocol (transmission control protocol, TCP) data packet.

The "PATH" field indicates a request path of an interface.

The "BODY" field is optional and indicates a request body. The BODY field uses a JSON packet format and a UTF-8 encoding mode. The BODY field includes a subfield of information such as an available radio frequency band and an available channel list of a corresponding frequency band that are in a Wi-Fi module of the mobile phone, and/or a source device identifier and a target device identifier. The device identifier is, for example, a device SN.

The "HTTP/1.1" field is related to a specific bearer protocol. For example, a packet includes the field when transmission is performed based on the HTTP protocol, and a packet does not include the field when transmission is performed based on a CoAP.

The following are several examples of request packets:

Example 1: The request packet is transmitted based on the HTTP protocol or an HTTPS protocol.

A packet is transmitted by using a GET method.

```
          GET /{cloud_prefixl/{devId}/PATH HTTP/1.1
          Authorization: Bearer 7dc923e1-027d-476e-ad16-380d2166c7b7
          Content-Type: application/json
```

A packet is transmitted by using a POST method.

```
          POST /{cloud_prefixl/{devId}/PATH HTTP/1.1
          Authorization: Bearer 7dc923e1-027d-476e-ad16-380d2166c7b7
          Content-Type: application/json
          [BODY]
```

Example 2: The request packet is transmitted based on the CoAP, and a shared key is negotiated by using a secure transport layer (transport layer security, TLS) protocol or a datagram transport layer security (datagram transport layer security, DTLS) protocol, to ensure transmission confidentiality and data integrity.

A packet is transmitted by using a GET method.

```
          GET /{ dev_specific_prefix }/PATH
          Option: session_id
          2.05 content
          aes_encrypted([BODY])
```

A packet is transmitted by using a POST method.

```
          POST /{dev_specific_prefix}/PATH
          Option: session_id
          aes_encrypted([BODY])
          2.05 content
          aes_encrypted([BODY])
```

It should be noted that when a packet is transmitted based on the HTTP protocol or the HTTPS protocol, the TLS or a secure sockets layer (secure sockets layer, SSL) protocol can also be used to negotiate the shared key. For a process of negotiating a shared key, refer to the conventional technology. Details are not described in this embodiment of this application.

S704b: The router forwards the parameter negotiation request to the target PC based on the PC identifier.

In some embodiments, after receiving the parameter negotiation request, the router forwards, based on the PC identifier, the negotiation request to the target PC corresponding to the PC identifier.

S705: The PC selects a target radio frequency parameter from the first radio frequency parameter, and creates a hotspot.

In some embodiments, after receiving the first radio frequency parameter sent by the mobile phone, the PC selects an optimal radio frequency band and an optimal channel as the target radio frequency parameter based on the first radio frequency parameter and a radio frequency parameter that is currently available and that is supported by the PC. For example, the PC selects a radio frequency band and a channel with best expected signal quality from radio frequency bands and channels that are available and that are supported by both the PC and the mobile phone. For another example, the PC selects a radio frequency band and a channel with a minimum delay from radio frequency bands and channels that are available and that are supported by both the PC and the mobile phone.

In some embodiments, after determining the target radio frequency parameter, the PC creates the hotspot, uses the PC as a soft access point (soft AP) device, and configures a radio frequency parameter that is of a radio frequency interface and that is of a Wi-Fi P2P working group, so that the mobile phone can subsequently access the radio frequency interface, to transmit projection data. Further, the PC serves as a soft AP device and sends a beacon (beacon) frame based on a preset period based on the target radio frequency parameter, so that the mobile phone can discover the soft AP device.

In some embodiments, the PC may further configure an SSID of the hotspot, and subsequently the mobile phone accesses the PC hotspot by using the SSID. Optionally, the PC may separately configure and generate an SSID of the hotspot, and send the SSID to the mobile phone. Alternatively, an SSID of the hotspot is preconfigured, and the SSID is configured in the PC and the mobile phone. When the PC needs to configure the SSID of the hotspot, the preset SSID is directly obtained for configuration. In this case, the PC does not need to send the SSID to the mobile phone, and the mobile phone can determine an SSID of a corresponding hotspot based on the preconfigured SSID.

S706a: The PC sends a parameter negotiation response to the router, where the parameter negotiation response carries the target radio frequency parameter.

In some embodiments, after determining the target radio frequency parameter, the PC sends the target radio frequency parameter to the router along a path for receiving the parameter negotiation request, and the router forwards the target radio frequency parameter to the mobile phone, so that the PC and the mobile phone establish the Wi-Fi P2P working group. Optionally, the parameter negotiation response may further carry the SSID and a power value of the hotspot.

For example, the following shows a parameter negotiation response packet.

```
          HTTP/1.1 200 OK
          [BODY]
```

The "200 OK" field indicates that a corresponding request is successfully processed on a server. That is, target radio frequency parameter selection is performed. The "BODY" field is used to carry a valid payload of a packet, for example, the target radio frequency parameter. The BODY field uses a JSON packet format and a UTF-8 encoding mode. The BODY field includes a frequency band selected by the PC for creating the hotspot and corresponding channel information, and/or an SSID, and/or a source device identifier and a target device identifier. The device identifier is, for example, a device SN.

S706b: The router forwards the parameter negotiation response to the mobile phone.

In some embodiments, after receiving the parameter negotiation response, the router forwards the parameter negotiation response to the corresponding mobile phone that sends the parameter negotiation request. Optionally, in the foregoing step S704a, the parameter negotiation request may further carry a mobile phone identifier. Correspondingly, the parameter negotiation response sent by the PC carries the mobile phone identifier, so that after receiving the parameter negotiation response, the router can send the parameter negotiation response to the target mobile phone based on the mobile phone identifier.

Therefore, based on a HiLink ecosystem-related protocol, the mobile phone adds a protocol interface used to transmit a Wi-Fi negotiation parameter. For example, in this embodiment of this application, the mobile phone transmits the first radio frequency parameter through the HiLink session channel established between the mobile phone and the router by using the method shown in FIG. 6, and receives the target radio frequency parameter determined by the PC, to implement radio frequency parameter negotiation with the PC. Compared with that the PC and the mobile phone perform Wi-Fi parameter negotiation based on a link layer protocol shown in FIG. 5, in this embodiment of this application, a parameter negotiation process can be performed based on an application layer protocol (that is, a HiLink ecosystem-related protocol), and is not limited to a Bluetooth connection.

S707: The mobile phone and the PC establish a Wi-Fi P2P socket connection, and start to transmit data.

In some embodiments, after receiving the parameter negotiation response, the mobile phone determines that the parameter negotiation succeeds. The mobile phone sends, based on an 802.11 protocol, a probe request (probe request) management frame on the radio frequency band and the channel that are specified in the target radio frequency parameter that is determined through negotiation, to search for the beacon frame sent by the PC. After the PC is found, an authentication process and an association process are automatically triggered, a Wi-Fi P2P socket connection is established with the PC, to start transmission of projection data. The transmitted projection data includes, for example, video image information, keyboard and mouse information. For the Wi-Fi authentication process and the association process of the mobile phone and the PC, refer to the conventional technology. Details are not described herein again.

In some scenarios, the router does not set layer 2 isolation in the local area network, and the mobile phone and the PC can directly communicate with each other. In this case, in a process of performing parameter negotiation between the mobile phone and the PC, a router does not need to be used to forward a parameter used for negotiation.

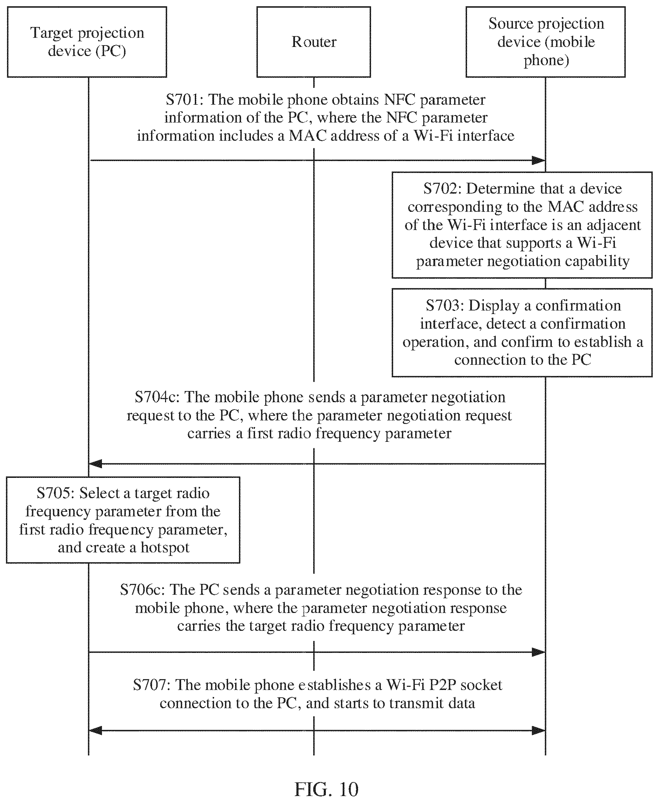

For example, in a scenario in which the mobile phone and the PC directly perform parameter negotiation, as shown in FIG. 10, the parameter negotiation process includes S704c to S706c.

S704c: The mobile phone sends a parameter negotiation request to the PC, where the parameter negotiation request carries a first radio frequency parameter.

In some embodiments, the mobile phone and the PC support a specific representational state transfer (representational state transfer, REST) interface, and the mobile phone and the PC can directly communicate with each other based on the REST interface. Optionally, the mobile phone receives the device list information broadcast by the router, and obtains an IP address of the PC from the device list information. Alternatively, the mobile phone searches an address resolution protocol (address resolution protocol, ARP) table based on the MAC address obtained in step S701, and determines the IP address of the PC based on a correspondence between the MAC address in the ARP table and the IP address. Then, the mobile phone sends the parameter negotiation request to the PC by using the IP address.

The REST indicates a data exchange rule between a client and a service end in a data transmission process. The PC serves as a service end of the REST interface, and the mobile phone serves as a client end of the REST interface.

Optionally, the parameter negotiation request packet is transmitted based on the UPnP protocol or the CoAP in an HTTP (s) GET or HTTP (s) POST manner. For a format of the parameter negotiation request packet, refer to a format of the request packet described in step S704a. Details are not described herein again.

S705: The PC selects a target radio frequency parameter from the first radio frequency parameter, and creates a hotspot.

S706c: The PC sends a parameter negotiation response to the mobile phone, where the parameter negotiation response carries the target radio frequency parameter.

In some embodiments, after receiving the parameter negotiation request directly sent by the mobile phone, the PC directly returns a parameter negotiation response correspondingly.

Optionally, for remaining content of step S705 to step S706c, refer to related content of step S705 to step S706b shown in FIG. 7. Details are not described herein again.

Therefore, according to the connection establishment method provided in this embodiment of this application, based on the NFC function, the mobile phone can directly obtain the MAC address of the Wi-Fi interface of the PC from the NFC module of the PC, and establish the Wi-Fi P2P working group with the PC by using the MAC address of the Wi-Fi interface, to perform data transmission. Compared with a connection method in the conventional technology, there is no need to perform a Bluetooth connection first, and then establish the Wi-Fi P2P working group based on the Bluetooth connection. This avoids a problem that a link establishment delay is long due to poor performance and stability of a Bluetooth connection, and improves interaction performance.

In some scenarios, the mobile phone may discover the PC without using NFC tap to transfer. In this case, the mobile phone may directly receive a PC selected by the user, determine a MAC address of a corresponding Wi-Fi interface, and establish a Wi-Fi P2P working group.

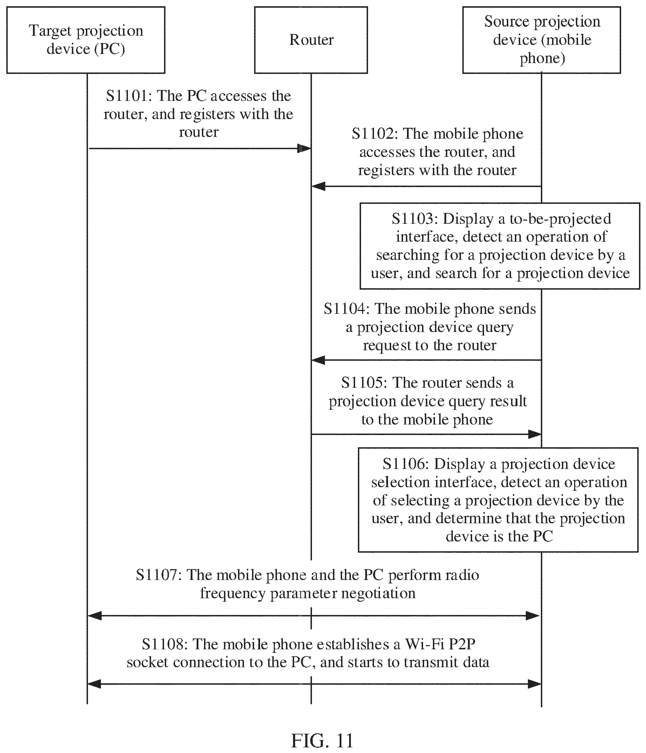

For example, FIG. 11 shows another connection establishment method according to an embodiment of this application. As shown in FIG. 11, the method includes S1101 to S1108.

S1101: A PC accesses a router, and registers with the router.

S1102: A mobile phone accesses the router, and registers with the router.

In some embodiments, in step S1101 and step S1102, the mobile phone and the PC access a Wi-Fi network provided by the same router. After accessing the router, the mobile phone and the PC search for a HiLink gateway based on a HiLink ecosystem protocol for registration. It is assumed that the router is a HiLink gateway. After the mobile phone and the PC access the router, the mobile phone and the PC directly register capabilities supported by the mobile phone and the PC and interface information such as Bluetooth interface information and Wi-Fi interface information, with the router,.

Optionally, for remaining content of step S1101 and step S1102, refer to related content of step S601 to step S610. Details are not described herein again.

S1103: The mobile phone displays a to-be-projected interface, detect an operation of searching for a projection device by a user, and searches for the projection device.

S1104: The mobile phone sends a projection device query request to the router.

S1105: The router sends a projection device query result to the mobile phone.

S1106: The mobile phone displays a projection device selection interface, detect an operation of selecting a projection device by the user, and determine that the projection device is the PC.

In some embodiments, in step S1103 to step S1106, after detecting a projection operation of the user, the mobile phone starts to search for a neighboring device that can be used for projection. For example, a query request is sent to the router. After receiving the query request, the router queries, based on registration information of a device accessing the router, a device that supports a Wi-Fi hotspot parameter negotiation capability, and sends the query result to the mobile phone. Optionally, the query result includes a MAC address of a Wi-Fi interface of the device. After the mobile phone receives the query result, the user determines whether to perform projection by using the queried device. If the user determines to perform projection by using the queried device, Wi-Fi hotspot parameter negotiation is performed with the projection device based on the MAC address of the Wi-Fi interface of the projection device selected by the user, to establish a Wi-Fi P2P working group and start projection. For another example, the mobile phone listens to neighboring device information that is changed and synchronized by the router, and obtains device list information. Then, the mobile phone directly queries, based on the device list information, a projection device that supports the Wi-Fi hotspot parameter negotiation capability and a MAC address of a corresponding Wi-Fi interface.

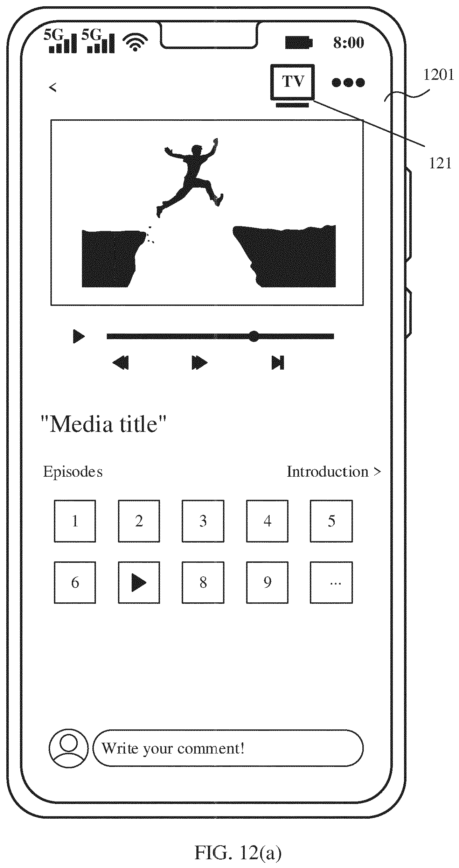

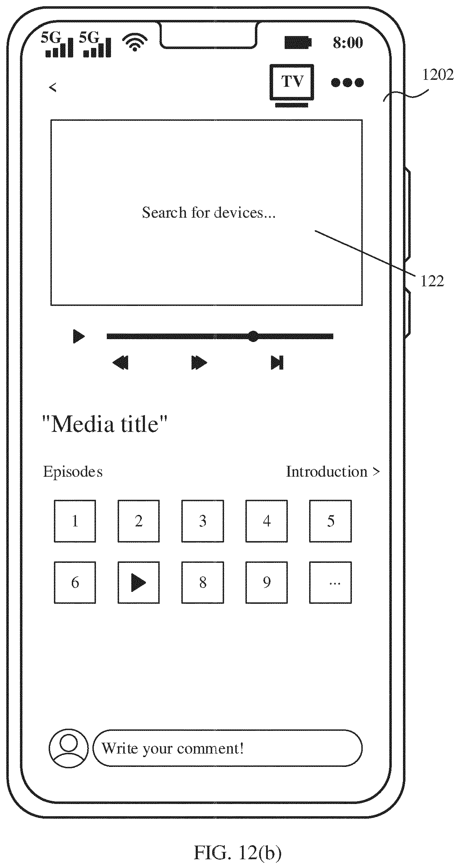

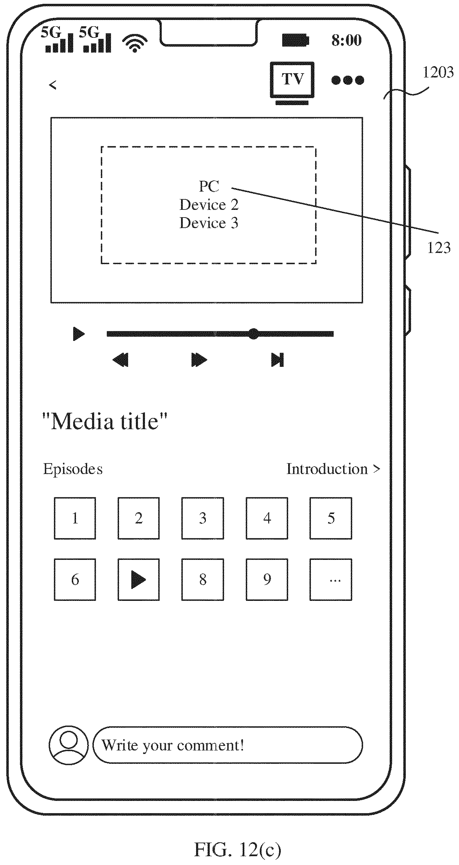

For example, on an interface 1201 shown in FIG. 12(a), a mobile phone detects an operation of tapping a control 121 by a user, and determines that the user needs to project a currently displayed video picture. The mobile phone displays an interface 1202 shown in FIG. 12(b), starts to search for a projection device that can be used for projection, and displays prompt content 122, to prompt the user that the mobile phone is currently searching for a device. Then, the mobile phone displays an interface 1203 shown in FIG. 12(c), to receive an operation of selecting a projection device by the user. For example, the mobile phone detects, on the interface 1203, an operation of tapping a device name 123 by the user, and determines that the projection device is a PC.

S1107: The mobile phone and the PC perform radio frequency parameter negotiation.

S1108: The mobile phone and the PC establish a Wi-Fi P2P socket connection, and start to transmit data.

Optionally, for content of step S1107 and step S1108, refer to content of step S704a to step S707 shown in FIG. 7, or refer to related content of step S704c to step S707 shown in FIG. 10. Details are not described herein again.

In this way, without using NFC parameter information, the mobile phone may also obtain the MAC address of the Wi-Fi interface of the PC, and directly establish the Wi-Fi P2P working group with the PC based on the MAC address of the Wi-Fi interface, thereby improving link establishment performance and stability, and improving user experience.

It can be understood that, to implement the foregoing functions, the first electronic device and the second electronic device and the AP device each includes a corresponding hardware structure and/or software module for performing each of the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software function module. It should be noted that, in embodiments of this application, module division is an example, and is merely a logical function division. During actual implementation, another division manner may be used.

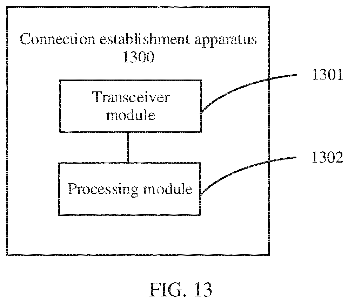

For example, FIG. 13 is a schematic diagram of a structure of a connection establishment apparatus according to an embodiment of this application. As shown in FIG. 13, the connection establishment apparatus 1300 includes a transceiver module 1301 and a processing module 1302.

In a possible design, the connection establishment apparatus 1300 may be configured to implement a function of the first electronic device in the foregoing method embodiment. The connection establishment apparatus 1300 may be the first electronic device, or may be a functional unit or a chip in the first electronic device, or an apparatus that matches the first electronic device and is used.

Optionally, the transceiver module 1301 is configured to support the connection establishment apparatus 1300 in performing one or more of step S701, step S704a, step S706b, and step S707 shown in FIG. 7 in the embodiment of this application; and/or the transceiver module 1301 is further configured to support the connection establishment apparatus 1300 in performing step S704c and step S706c shown in FIG. 10 in the embodiment of this application; and/or the transceiver module 1301 is further configured to support the connection establishment apparatus 1300 in performing step S1102, step S1104, step S1105, step S1107, and step S1108 shown in FIG. 11 in the embodiment of this application; and/or the transceiver module 1301 is further configured to support the connection establishment apparatus 1300 in performing other sending and receiving steps performed by the first electronic device in embodiments of this application.

Optionally, the processing module 1302 is configured to support the connection establishment apparatus 1300 in performing one or more of step S702 and step S703 shown in FIG. 7 or FIG. 10 in embodiments of this application; and/or the processing module 1302 is further configured to support the connection establishment apparatus 1300 in performing step S1103 and step S1106 shown in FIG. 11 in the embodiment of this application; and/or the processing module 1302 is further configured to support the connection establishment apparatus 1300 in performing another processing step performed by the first electronic device in embodiments of this application.

In another possible design, the connection establishment apparatus 1300 may be configured to implement a function of the second electronic device in the foregoing method embodiment. The connection establishment apparatus 1300 may be the second electronic device, or may be a functional unit or a chip in the second electronic device, or an apparatus that matches the second electronic device and is used.

Optionally, the transceiver module 1301 is configured to support the connection establishment apparatus 1300 in performing one or more of step S701, step S704b, step S706a, and step S707 shown in FIG. 7 in the embodiment of this application; and/or the transceiver module 1301 is further configured to support the connection establishment apparatus 1300 in performing step S704c and step S706c shown in FIG. 10 in the embodiment of this application; and/or the transceiver module 1301 is further configured to support the connection establishment apparatus 1300 in performing step S1101, step S1107, and step S1108 shown in FIG. 11 in the embodiment of this application; and/or the transceiver module 1301 is further configured to support the connection establishment apparatus 1300 in performing other sending and receiving steps performed by the second electronic device in embodiments of this application.

Optionally, the processing module 1302 is configured to support the connection establishment apparatus 1300 in performing step S705 shown in FIG. 7 in the embodiment of this application; and/or the processing module 1302 is further configured to support the connection establishment apparatus 1300 in performing another processing step performed by the second electronic device in embodiments of this application.

The processing module 1302 may be a processor or a controller. The processing module 1302 may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

Optionally, the connection establishment apparatus 1300 shown in FIG. 13 may further include a storage module (not shown in FIG. 13). The storage module stores a program or instructions. When the transceiver module 1301 and the processing module 1302 execute the program or the instructions, the connection establishment apparatus 1300 shown in FIG. 13 can perform the connection establishment method provided in embodiments of this application.

Optionally, the transceiver module may include a receiving module and a sending module. The receiving module is configured to receive a signal sent by another device. The sending module is configured to send a signal to the another device. A specific implementation of the transceiver module is not specifically limited in embodiments of this application.

Operations and/or functions of units in the connection establishment apparatus 1300 shown in FIG. 13 are separately used to implement corresponding procedures of the connection establishment method provided in the foregoing method embodiments. For brevity, details are not described herein again. For a technical effect of the connection establishment apparatus 1300 shown in FIG. 13, refer to the technical effect of the connection establishment method provided in the foregoing method side embodiments. Details are not described herein again.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a storage medium, configured to store instructions used by the foregoing communication apparatus.

An embodiment of this application further provides a computer-readable storage medium. The computer-readable storage medium stores instructions. When the instructions are run on a server, the server is enabled to perform the related method steps to implement the connection establishment method in the foregoing embodiments.

An embodiment of this application further provides a computer program product. When the computer program product is run on a computer, the computer is enabled to perform the foregoing related method steps, to implement the connection establishment method in the foregoing embodiments.

In addition, an embodiment of this application further provides an apparatus. The apparatus may be specifically a component or a module, and the apparatus may include one or more connected processors and a memory. The memory is configured to store a computer program, and one or more computer programs include instructions. When the instructions are executed by the one or more processors, the apparatus is enabled to perform the connection establishment method in the foregoing method embodiments.

The apparatus, the computer-readable storage medium, the computer program product, or the chip provided in embodiments of this application is configured to perform the corresponding method provided above. Therefore, for beneficial effects that can be achieved by the apparatus, the computer-readable storage medium, the computer program product, or the chip, refer to beneficial effects in the corresponding method provided above. Details are not described herein again.

Method or algorithm steps described in combination with the content disclosed in this application may be implemented by hardware, or may be implemented by a processor by executing software instructions. The software instruction may include a corresponding software module. The software module may be stored in a random access memory (random access memory, RAM), a flash memory, a read-only memory (read only memory, ROM), an erasable programmable read only memory (erasable programmable ROM, EPROM), an electrically erasable programmable read only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The foregoing descriptions about implementations allow a person skilled in the art to understand that, for the purpose of convenient and brief description, division of the foregoing function modules is taken as an example for illustration. During actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed methods may be implemented in other manners. For example, the described apparatus embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A connection establishment method, applied to a first electronic device, wherein the method comprises:
obtaining a media access control MAC address of a wireless fidelity Wi-Fi interface of a second electronic device in a near field communication NFC tag of the second electronic device;
querying, by using the MAC address of the Wi-Fi interface, whether the second electronic device has a Wi-Fi parameter negotiation capability;
performing Wi-Fi parameter negotiation with the second electronic device if the second electronic device has the Wi-Fi parameter negotiation capability, to obtain a target radio frequency parameter; and
establishing a Wi-Fi Direct channel with the second electronic device by using the target radio frequency parameter;
wherein the first electronic device and the second electronic device access a Wi-Fi network provided by a same wireless access point AP device, and the querying, by using the MAC address of the Wi-Fi interface, whether the second electronic device has a Wi-Fi parameter negotiation capability comprises:
receiving device list information sent by the AP device, wherein the device list information comprises capability information of an electronic device accessing the AP device; and
querying, in the device list information, first capability information of the second electronic device corresponding to the MAC address of the Wi-Fi interface, and determining whether the first capability information comprises the Wi-Fi parameter negotiation capability; or
sending a capability query request to the AP device, wherein the capability query request carries the MAC address of the Wi-Fi interface, and the capability query request requests to query whether the second electronic device has the Wi-Fi parameter negotiation capability; and
receiving a capability query response sent by the AP device, wherein the capability query response indicates whether the second electronic device has the Wi-Fi parameter negotiation capability.

2. The method according to claim 1, wherein before the obtaining a media access control MAC address of a wireless fidelity Wi-Fi interface of a second electronic device in a near field communication NFC tag of the second electronic device, the method further comprises:
sending a registration request to the AP device, wherein the registration request requests to register second capability information of the first electronic device, and the second capability information comprises the Wi-Fi parameter negotiation capability.

3. The method according to any one of claims 1 or 2, wherein the performing Wi-Fi parameter negotiation with the second electronic device if the second electronic device has the Wi-Fi parameter negotiation capability, to obtain a target radio frequency parameter comprises:
sending a Wi-Fi parameter negotiation request to the AP device, wherein the Wi-Fi parameter negotiation request carries an identifier of the second electronic device and a first radio frequency parameter, and the first radio frequency parameter comprises an idle radio frequency band in a radio frequency band supported by the first electronic device and an idle channel in a channel supported by the first electronic device; and
receiving a Wi-Fi parameter negotiation response that is sent by the second electronic device and forwarded by the AP device, wherein the Wi-Fi parameter negotiation response carries the target radio frequency parameter, and the target radio frequency parameter comprises a target radio frequency band selected from the idle radio frequency band and a target channel selected from the idle channel by the second electronic device.

4. The method according to any one of claims 1 or 2, wherein the performing Wi-Fi parameter negotiation with the second electronic device if the second electronic device has the Wi-Fi parameter negotiation capability, to obtain a target radio frequency parameter comprises:
sending a Wi-Fi parameter negotiation request to the second electronic device, wherein the Wi-Fi parameter negotiation request carries a first radio frequency parameter, and the first radio frequency parameter comprises an idle radio frequency band in a radio frequency band supported by the first electronic device and an idle channel in a channel supported by the first electronic device; and
receiving a Wi-Fi parameter negotiation response sent by the second electronic device, wherein the Wi-Fi parameter negotiation response carries the target radio frequency parameter, and the target radio frequency parameter comprises a target radio frequency band selected from the idle radio frequency band and a target channel selected from the idle channel by the second electronic device.

5. The method according to claim 3 or 4, wherein the establishing a Wi-Fi Direct channel with the second electronic device by using the target radio frequency parameter comprises:
sending a connection establishment request on the target radio frequency band and the target channel, wherein the connection establishment request requests to establish the Wi-Fi Direct channel with the second electronic device; and
receiving a connection establishment response sent by the second electronic device, and completing establishment of the Wi-Fi Direct channel.

6. A connection establishment method, applied to a first electronic device, wherein the method comprises:
sending a device query request to a wireless access point AP device in response to a first operation, wherein the device query request requests to query a device with a Wi-Fi parameter negotiation capability;
receiving a device query response sent by the AP device, wherein the device query response carries a MAC address of a wireless fidelity Wi-Fi interface of a second electronic device, and the second electronic device has the Wi-Fi parameter negotiation capability;
performing Wi-Fi parameter negotiation with the second electronic device by using the MAC address of the Wi-Fi interface, to obtain a target radio frequency parameter; and
establishing a Wi-Fi Direct channel with the second electronic device by using the target radio frequency parameter;
wherein the performing Wi-Fi parameter negotiation with the second electronic device by using the MAC address of the Wi-Fi interface, to obtain a target radio frequency parameter comprises:
sending a Wi-Fi parameter negotiation request to the AP device, wherein the Wi-Fi parameter negotiation request carries an identifier of the second electronic device and a first radio frequency parameter, and the first radio frequency parameter comprises an idle radio frequency band in a radio frequency band supported by the first electronic device and an idle channel in a channel supported by the first electronic device; and
receiving a Wi-Fi parameter negotiation response that is sent by the second electronic device and forwarded by the AP device, wherein the Wi-Fi parameter negotiation response carries the target radio frequency parameter, and the target radio frequency parameter comprises a target radio frequency band selected from the idle radio frequency band and a target channel selected from the idle channel by the second electronic device;
or:
sending a Wi-Fi parameter negotiation request to the second electronic device, wherein the Wi-Fi parameter negotiation request carries a first radio frequency parameter, and the first radio frequency parameter comprises an idle radio frequency band in a radio frequency band supported by the first electronic device and an idle channel in a channel supported by the first electronic device; and
receiving a Wi-Fi parameter negotiation response sent by the second electronic device, wherein the Wi-Fi parameter negotiation response carries the target radio frequency parameter, and the target radio frequency parameter comprises a target radio frequency band selected from the idle radio frequency band and a target channel selected from the idle channel by the second electronic device.

7. The method according to claim 6, wherein before the sending a device query request to a wireless access point AP device in response to a first operation, the method further comprises:
sending a registration request to the AP device, wherein the registration request requests to register second capability information of the first electronic device, and the second capability information comprises the Wi-Fi parameter negotiation capability.

8. The method according to claim 6 or 7, wherein the establishing a Wi-Fi Direct channel with the second electronic device by using the target radio frequency parameter comprises:
sending a connection establishment request on the target radio frequency band and the target channel, wherein the connection establishment request requests to establish the Wi-Fi Direct channel with the second electronic device; and
receiving a connection establishment response sent by the second electronic device, and completing establishment of the Wi-Fi Direct channel.

9. An electronic device, comprising a processor (110) and a memory (121), wherein the memory is coupled to the processor, the memory is configured to store computer program code, the computer program code comprises computer instructions, and when the processor reads the computer instructions from the memory, the electronic device is enabled to perform the connection establishment method according to any one of claims 1 to 5.

10. An electronic device, comprising a processor (110) and a memory (121), wherein the memory is coupled to the processor, the memory is configured to store computer program code, the computer program code comprises computer instructions, and when the processor reads the computer instructions from the memory, the electronic device is enabled to perform the connection establishment method according to any one of claims 6 to 8.

11. A computer-readable storage medium, comprising a program or instructions, wherein when the program or the instructions are executed, the method according to any one of claims 1 to 8 is implemented.

## Patentansprüche

1. Verbindungsaufbauverfahren, angewandt auf eine erste elektronische Vorrichtung, wobei das Verfahren Folgendes umfasst:
Erlangen einer Media-Access-Control-MAC-Adresse einer Wireless-Fidelity-Wi-Fi-Schnittstelle einer zweiten elektronischen Vorrichtung in einem Near-Field-Communication-NFC-Tag der zweiten elektronischen Vorrichtung;
Abfragen, unter Verwendung der MAC-Adresse der Wi-Fi-Schnittstelle, ob die zweite elektronische Vorrichtung eine Fähigkeit zur Aushandlung von Wi-Fi-Parametern aufweist;
Durchführen einer Aushandlung von Wi-Fi-Parametern mit der zweiten elektronischen Vorrichtung, falls die zweite elektronische Vorrichtung die Fähigkeit zur Aushandlung von Wi-Fi-Parametern aufweist, um einen Ziel-Funkfrequenzparameter zu erlangen; und
Aufbauen eines Wi-Fi-Direct-Kanals mit der zweiten elektronischen Vorrichtung unter Verwendung des Ziel-Funkfrequenzparameters;
wobei die erste elektronische Vorrichtung und die zweite elektronische Vorrichtung auf ein Wi-Fi-Netzwerk zugreifen, das durch eine gleiche Wireless-Access-Point-AP-Vorrichtung bereitgestellt wird, und das Abfragen, unter Verwendung der MAC-Adresse der Wi-Fi-Schnittstelle, ob die zweite elektronische Vorrichtung eine Fähigkeit zur Aushandlung von Wi-Fi-Parametern aufweist, Folgendes umfasst:
Empfangen von Vorrichtungslisteninformationen, die durch die AP-Vorrichtung gesendet werden, wobei die Vorrichtungslisteninformationen Fähigkeitsinformationen einer elektronischen Vorrichtung umfassen, die auf die AP-Vorrichtung zugreift; und
Abfragen erster Fähigkeitsinformationen der zweiten elektronischen Vorrichtung, die der MAC-Adresse der Wi-Fi-Schnittstelle entspricht, in den Vorrichtungslisteninformationen und Bestimmen, ob die ersten Fähigkeitsinformationen die Fähigkeit zur Aushandlung von Wi-Fi-Parametern umfassen; oder
Senden einer Fähigkeitsabfragenanforderung an die AP-Vorrichtung, wobei die Fähigkeitsabfragenanforderung die MAC-Adresse der Wi-Fi-Schnittstelle enthält und die Fähigkeitsabfragenanforderung anfordert abzufragen, ob die zweite elektronische Vorrichtung die Fähigkeit zur Aushandlung von Wi-Fi-Parametern aufweist; und
Empfangen einer Fähigkeitsabfragenantwort, die durch die AP-Vorrichtung gesendet wird, wobei die Fähigkeitsabfragenantwort angibt, ob die zweite elektronische Vorrichtung die Fähigkeit zur Aushandlung von Wi-Fi-Parametern aufweist.

2. Verfahren nach Anspruch 1, wobei das Verfahren vor dem Erlangen einer Media-Access-Control-MAC-Adresse einer Wireless-Fidelity-Wi-Fi-Schnittstelle einer zweiten elektronischen Vorrichtung in einem Near-Field-Communication-NFC-Tag der zweiten elektronischen Vorrichtung ferner Folgendes umfasst:
Senden einer Registrierungsanforderung an die AP-Vorrichtung, wobei die Registrierungsanforderung anfordert, zweite Fähigkeitsinformationen der ersten elektronischen Vorrichtung zu registrieren, und die zweiten Fähigkeitsinformationen die Fähigkeit zur Aushandlung von Wi-Fi-Parametern umfassen.

3. Verfahren nach einem der Ansprüche 1 oder 2, wobei das Durchführen einer Aushandlung von Wi-Fi-Parametern mit der zweiten elektronischen Vorrichtung, falls die zweite elektronische Vorrichtung die Fähigkeit zur Aushandlung von Wi-Fi-Parametern aufweist, um einen Ziel-Funkfrequenzparameter zu erlangen, Folgendes umfasst:
Senden einer Anforderung zur Aushandlung von Wi-Fi-Parametern an die AP-Vorrichtung, wobei die Anforderung zur Aushandlung von Wi-Fi-Parametern eine Kennung der zweiten elektronischen Vorrichtung und einen ersten Funkfrequenzparameter enthält und der erste Funkfrequenzparameter ein freies Funkfrequenzband in einem durch die erste elektronische Vorrichtung unterstützten Funkfrequenzband und einen freien Kanal in einem durch die erste elektronische Vorrichtung unterstützten Kanal umfasst; und
Empfangen einer Antwort auf die Aushandlung von Wi-Fi-Parametern, die durch die zweite elektronische Vorrichtung gesendet wird und durch die AP-Vorrichtung weitergeleitet wird, wobei die Antwort auf die Aushandlung von Wi-Fi-Parametern den Ziel-Funkfrequenzparameter enthält und der Ziel-Funkfrequenzparameter ein Ziel-Funkfrequenzband, das aus dem freien Funkfrequenzband ausgewählt ist, und einen Zielkanal, der durch die zweite elektronische Vorrichtung aus dem freien Kanal ausgewählt ist, umfasst.

4. Verfahren nach einem der Ansprüche 1 oder 2, wobei das Durchführen einer Aushandlung von Wi-Fi-Parametern mit der zweiten elektronischen Vorrichtung, falls die zweite elektronische Vorrichtung die Fähigkeit zur Aushandlung von Wi-Fi-Parametern aufweist, um einen Ziel-Funkfrequenzparameter zu erlangen, Folgendes umfasst:
Senden einer Anforderung zur Aushandlung von Wi-Fi-Parametern an die zweite elektronische Vorrichtung, wobei die Anforderung zur Aushandlung von Wi-Fi-Parametern einen ersten Funkfrequenzparameter enthält und der erste Funkfrequenzparameter ein freies Funkfrequenzband in einem durch die erste elektronische Vorrichtung unterstützten Funkfrequenzband und einen freien Kanal in einem durch die erste elektronische Vorrichtung unterstützten Kanal umfasst; und
Empfangen einer Antwort auf die Aushandlung von Wi-Fi-Parametern, die durch die zweite elektronische Vorrichtung gesendet wird, wobei die Antwort auf die Aushandlung von Wi-Fi-Parametern den Ziel-Funkfrequenzparameter enthält und der Ziel-Funkfrequenzparameter ein Ziel-Funkfrequenzband, das aus dem freien Funkfrequenzband ausgewählt ist, und einen Zielkanal, der durch die zweite elektronische Vorrichtung aus dem freien Kanal ausgewählt ist, umfasst.

5. Verfahren nach Anspruch 3 oder 4, wobei das Aufbauen eines Wi-Fi-Direct-Kanals mit der zweiten elektronischen Vorrichtung unter Verwendung des Ziel-Funkfrequenzparameters Folgendes umfasst:
Senden einer Verbindungsaufbauanforderung auf dem Zielfunkfrequenzband und dem Zielkanal, wobei die Verbindungsaufbauanforderung anfordert, den Wi-Fi-Direct-Kanal mit der zweiten elektronischen Vorrichtung aufzubauen; und
Empfangen einer Verbindungsaufbauantwort, die durch die zweite elektronische Vorrichtung gesendet wird, und Abschließen des Aufbaus des Wi-Fi-Direct-Kanals.

6. Verbindungsaufbauverfahren, angewandt auf eine erste elektronische Vorrichtung, wobei das Verfahren Folgendes umfasst:
Senden einer Vorrichtungsabfrageanforderung an eine Wireless-Access-Point-AP-Vorrichtung als Reaktion auf eine erste Operation, wobei die Vorrichtungsabfrageanforderung anfordert, eine Vorrichtung mit einer Fähigkeit zur Aushandlung von Wi-Fi-Parametern abzufragen;
Empfangen einer Vorrichtungsabfrageantwort, die durch die AP-Vorrichtung gesendet wird, wobei die Vorrichtungsabfrageantwort eine MAC-Adresse einer Wireless-Fidelity-Wi-Fi-Schnittstelle einer zweiten elektronischen Vorrichtung enthält und die zweite elektronische Vorrichtung die Fähigkeit zur Aushandlung von Wi-Fi-Parametern aufweist;
Durchführen einer Aushandlung von Wi-Fi-Parametern mit der zweiten elektronischen Vorrichtung unter Verwendung der MAC-Adresse der Wi-Fi-Schnittstelle, um einen Ziel-Funkfrequenzparameter zu erlangen; und
Aufbauen eines Wi-Fi-Direct-Kanals mit der zweiten elektronischen Vorrichtung unter Verwendung des Ziel-Funkfrequenzparameters;
wobei das Durchführen einer Aushandlung von Wi-Fi-Parametern mit der zweiten elektronischen Vorrichtung unter Verwendung der MAC-Adresse der Wi-Fi-Schnittstelle, um einen Ziel-Funkfrequenzparameter zu erlangen, Folgendes umfasst:
Senden einer Anforderung zur Aushandlung von Wi-Fi-Parametern an die AP-Vorrichtung, wobei die Anforderung zur Aushandlung von Wi-Fi-Parametern eine Kennung der zweiten elektronischen Vorrichtung und einen ersten Funkfrequenzparameter enthält und der erste Funkfrequenzparameter ein freies Funkfrequenzband in einem durch die erste elektronische Vorrichtung unterstützten Funkfrequenzband und einen freien Kanal in einem durch die erste elektronische Vorrichtung unterstützten Kanal umfasst; und
Empfangen einer Antwort auf die Aushandlung von Wi-Fi-Parametern, die durch die zweite elektronische Vorrichtung gesendet wird und durch die AP-Vorrichtung weitergeleitet wird, wobei die Antwort auf die Aushandlung von Wi-Fi-Parametern den Ziel-Funkfrequenzparameter enthält und der Ziel-Funkfrequenzparameter ein Ziel-Funkfrequenzband, das aus dem freien Funkfrequenzband ausgewählt ist, und einen Zielkanal, der durch die zweite elektronische Vorrichtung aus dem freien Kanal ausgewählt ist, umfasst;
oder:
Senden einer Anforderung zur Aushandlung von Wi-Fi-Parametern an die zweite elektronische Vorrichtung, wobei die Anforderung zur Aushandlung von Wi-Fi-Parametern einen ersten Funkfrequenzparameter enthält und der erste Funkfrequenzparameter ein freies Funkfrequenzband in einem durch die erste elektronische Vorrichtung unterstützten Funkfrequenzband und einen freien Kanal in einem durch die erste elektronische Vorrichtung unterstützten Kanal umfasst; und
Empfangen einer Antwort auf die Aushandlung von Wi-Fi-Parametern, die durch die zweite elektronische Vorrichtung gesendet wird, wobei die Antwort auf die Aushandlung von Wi-Fi-Parametern den Ziel-Funkfrequenzparameter enthält und der Ziel-Funkfrequenzparameter ein Ziel-Funkfrequenzband, das aus dem freien Funkfrequenzband ausgewählt ist, und einen Zielkanal, der durch die zweite elektronische Vorrichtung aus dem freien Kanal ausgewählt ist, umfasst.

7. Verfahren nach Anspruch 6, wobei das Verfahren vor dem Senden einer Vorrichtungsabfrageanforderung an eine Wireless-Access-Point-AP-Vorrichtung als Reaktion auf eine erste Operation ferner Folgendes umfasst:
Senden einer Registrierungsanforderung an die AP-Vorrichtung, wobei die Registrierungsanforderung anfordert, zweite Fähigkeitsinformationen der ersten elektronischen Vorrichtung zu registrieren, und die zweiten Fähigkeitsinformationen die Fähigkeit zur Aushandlung von Wi-Fi-Parametern umfassen.

8. Verfahren nach Anspruch 6 oder 7, wobei das Aufbauen eines Wi-Fi-Direct-Kanals mit der zweiten elektronischen Vorrichtung unter Verwendung des Ziel-Funkfrequenzparameters Folgendes umfasst:
Senden einer Verbindungsaufbauanforderung auf dem Zielfunkfrequenzband und dem Zielkanal, wobei die Verbindungsaufbauanforderung anfordert, den Wi-Fi-Direct-Kanal mit der zweiten elektronischen Vorrichtung aufzubauen; und
Empfangen einer Verbindungsaufbauantwort, die durch die zweite elektronische Vorrichtung gesendet wird, und Abschließen des Aufbaus des Wi-Fi-Direct-Kanals.

9. Elektronische Vorrichtung, umfassend einen Prozessor (110) und einen Speicher (121), wobei der Speicher mit dem Prozessor gekoppelt ist, der Speicher dazu konfiguriert ist, einen Computerprogrammcode zu speichern, der Computerprogrammcode Computeranweisungen umfasst und die elektronische Vorrichtung in die Lage versetzt wird, das Verbindungsaufbauverfahren nach einem der Ansprüche 1 bis 5 durchzuführen, wenn der Prozessor die Computeranweisungen aus dem Speicher liest.

10. Elektronische Vorrichtung, umfassend einen Prozessor (110) und einen Speicher (121), wobei der Speicher mit dem Prozessor gekoppelt ist, der Speicher dazu konfiguriert ist, einen Computerprogrammcode zu speichern, der Computerprogrammcode Computeranweisungen umfasst und die elektronische Vorrichtung in die Lage versetzt wird, das Verbindungsaufbauverfahren nach einem der Ansprüche 6 bis 8 durchzuführen, wenn der Prozessor die Computeranweisungen aus dem Speicher liest.

11. Computerlesbares Speichermedium, umfassend ein Programm oder Anweisungen, wobei das Verfahren nach einem der Ansprüche 1 bis 8 implementiert wird, wenn das Programm oder die Anweisungen ausgeführt werden.

## Revendications

1. Procédé d'établissement de connexion, appliqué à un premier dispositif électronique, dans lequel le procédé comprend :
l'obtention d'une adresse de contrôle d'accès au support MAC d'une interface de fidélité sans fil Wi-Fi d'un second dispositif électronique dans une étiquette de communication en champ proche NFC du second dispositif électronique ;
l'interrogation, en utilisant l'adresse MAC de l'interface Wi-Fi, pour savoir si le second dispositif électronique possède une capacité de négociation de paramètres Wi-Fi ;
la réalisation d'une négociation de paramètres Wi-Fi avec le second dispositif électronique, si le second dispositif électronique possède la capacité de négociation de paramètres Wi-Fi, afin d'obtenir un paramètre de fréquence radio cible ; et
l'établissement d'un canal Wi-Fi Direct avec le second dispositif électronique en utilisant le paramètre de fréquence radio cible ;
dans lequel le premier dispositif électronique et le second dispositif électronique accèdent à un réseau Wi-Fi fourni par un même dispositif de point d'accès AP sans fil, et l'interrogation, en utilisant l'adresse MAC de l'interface Wi-Fi, pour savoir si le second dispositif électronique possède une capacité de négociation de paramètres Wi-Fi comprend :
la réception d'informations de liste de dispositifs envoyées par le dispositif AP, dans lequel les informations de liste de dispositifs comprennent des informations de capacité d'un dispositif électronique accédant au dispositif AP ; et
l'interrogation, dans les informations de liste de dispositifs, de premières informations de capacité du second dispositif électronique correspondant à l'adresse MAC de l'interface Wi-Fi, et le fait de déterminer si les premières informations de capacité comprennent la capacité de négociation de paramètres Wi-Fi ; ou
l'envoi d'une demande d'interrogation de capacité au dispositif AP, dans lequel la demande d'interrogation de capacité transporte l'adresse MAC de l'interface Wi-Fi et la demande d'interrogation de capacité demande à interroger pour savoir si le second dispositif électronique possède la capacité de négociation de paramètres Wi-Fi ; et
la réception d'une réponse d'interrogation de capacité envoyée par le dispositif AP, dans lequel la réponse d'interrogation de capacité indique si le second dispositif électronique possède la capacité de négociation de paramètres Wi-Fi.

2. Procédé selon la revendication 1, dans lequel, avant l'obtention d'une adresse de contrôle d'accès au support MAC d'une interface de fidélité sans fil Wi-Fi d'un second dispositif électronique dans une étiquette de communication en champ proche NFC du second dispositif électronique, le procédé comprend également :
l'envoi d'une demande d'enregistrement au dispositif AP, dans lequel la demande d'enregistrement demande l'enregistrement de secondes informations de capacité du premier dispositif électronique, et les secondes informations de capacité comprennent la capacité de négociation de paramètres Wi-Fi.

3. Procédé selon l'une quelconque des revendications 1 ou 2, dans lequel la réalisation de négociation de paramètres Wi-Fi avec le second dispositif électronique, si le second dispositif électronique possède la capacité de négociation de paramètres Wi-Fi, afin d'obtenir un paramètre de fréquence radio cible, comprend :
l'envoi d'une demande de négociation de paramètres Wi-Fi au dispositif AP, dans lequel la demande de négociation de paramètres Wi-Fi transporte un identifiant du second dispositif électronique et un premier paramètre de fréquence radio, et le premier paramètre de fréquence radio comprend une bande de fréquence radio inactive dans une bande de fréquence radio prise en charge par le premier dispositif électronique et un canal inactif dans un canal pris en charge par le premier dispositif électronique ; et
la réception d'une réponse de négociation de paramètres Wi-Fi envoyée par le second dispositif électronique et transférée par le dispositif AP, dans lequel la réponse de négociation de paramètres Wi-Fi transporte le paramètre de fréquence radio cible, et le paramètre de fréquence radio cible comprend une bande de fréquence radio cible sélectionnée parmi la bande de fréquence radio inactive et un canal cible sélectionné parmi le canal inactif par le second dispositif électronique.

4. Procédé selon l'une quelconque des revendications 1 ou 2, dans lequel la réalisation de négociation de paramètres Wi-Fi avec le second dispositif électronique, si le second dispositif électronique possède la capacité de négociation de paramètres Wi-Fi, afin d'obtenir un paramètre de fréquence radio cible, comprend :
l'envoi d'une demande de négociation de paramètres Wi-Fi au second dispositif électronique, dans lequel la demande de négociation de paramètres Wi-Fi transporte un premier paramètre de fréquence radio, et le premier paramètre de fréquence radio comprend une bande de fréquence radio inactive dans une bande de fréquence radio prise en charge par le premier dispositif électronique et un canal inactif dans un canal pris en charge par le premier dispositif électronique ; et
la réception d'une réponse de négociation de paramètres Wi-Fi envoyée par le second dispositif électronique, dans lequel la réponse de négociation de paramètres Wi-Fi transporte le paramètre de fréquence radio cible, et le paramètre de fréquence radio cible comprend une bande de fréquence radio cible sélectionnée parmi la bande de fréquence radio inactive et un canal cible sélectionné parmi le canal inactif par le second dispositif électronique.

5. Procédé selon la revendication 3 ou 4, dans lequel l'établissement d'un canal Wi-Fi Direct avec le second dispositif électronique en utilisant le paramètre de fréquence radio cible comprend :
l'envoi d'une demande d'établissement de connexion sur la bande de fréquence radio cible et le canal cible, dans lequel la demande d'établissement de connexion demande l'établissement du canal Wi-Fi Direct avec le second dispositif électronique ; et
la réception d'une réponse d'établissement de connexion envoyée par le second dispositif électronique et l'achèvement de l'établissement du canal Wi-Fi Direct.

6. Procédé d'établissement de connexion, appliqué à un premier dispositif électronique, dans lequel le procédé comprend :
l'envoi d'une demande d'interrogation de dispositif à un dispositif de point d'accès AP sans fil en réponse à une première opération, dans lequel la demande d'interrogation de dispositif demande d'interroger un dispositif avec une capacité de négociation de paramètres Wi-Fi ;
la réception d'une réponse d'interrogation de dispositif envoyée par le dispositif AP, dans lequel la réponse d'interrogation de dispositif transporte une adresse MAC d'une interface de fidélité sans fil Wi-Fi d'un second dispositif électronique, et le second dispositif électronique possède la capacité de négociation de paramètres Wi-Fi ;
la réalisation d'une négociation de paramètres Wi-Fi avec le second dispositif électronique en utilisant l'adresse MAC de l'interface Wi-Fi, afin d'obtenir un paramètre de fréquence radio cible ; et
l'établissement d'un canal Wi-Fi Direct avec le second dispositif électronique en utilisant le paramètre de fréquence radio cible ;
dans lequel la réalisation de négociation de paramètres Wi-Fi avec le second dispositif électronique en utilisant l'adresse MAC de l'interface Wi-Fi afin d'obtenir un paramètre de fréquence radio cible, comprend :
l'envoi d'une demande de négociation de paramètres Wi-Fi au dispositif AP, dans lequel la demande de négociation de paramètres Wi-Fi transporte un identifiant du second dispositif électronique et un premier paramètre de fréquence radio, et le premier paramètre de fréquence radio comprend une bande de fréquence radio inactive dans une bande de fréquence radio prise en charge par le premier dispositif électronique et un canal inactif dans un canal pris en charge par le premier dispositif électronique ; et
la réception d'une réponse de négociation de paramètres Wi-Fi envoyée par le second dispositif électronique et transférée par le dispositif AP, dans lequel la réponse de négociation de paramètres Wi-Fi transporte le paramètre de fréquence radio cible, et le paramètre de fréquence radio cible comprend une bande de fréquence radio cible sélectionnée parmi la bande de fréquence radio inactive et un canal cible sélectionné parmi le canal inactif par le second dispositif électronique ;
ou :
l'envoi d'une demande de négociation de paramètres Wi-Fi au second dispositif électronique, dans lequel la demande de négociation de paramètres Wi-Fi transporte un premier paramètre de fréquence radio, et le premier paramètre de fréquence radio comprend une bande de fréquence radio inactive dans une bande de fréquence radio prise en charge par le premier dispositif électronique et un canal inactif dans un canal pris en charge par le premier dispositif électronique ; et
la réception d'une réponse de négociation de paramètres Wi-Fi envoyée par le second dispositif électronique, dans lequel la réponse de négociation de paramètres Wi-Fi transporte le paramètre de fréquence radio cible, et le paramètre de fréquence radio cible comprend une bande de fréquence radio cible sélectionnée parmi la bande de fréquence radio inactive et un canal cible sélectionné parmi le canal inactif par le second dispositif électronique.

7. Procédé selon la revendication 6, dans lequel, avant l'envoi d'une demande d'interrogation de dispositif à un dispositif de point d'accès AP sans fil en réponse à une première opération, le procédé comprend également :
l'envoi d'une demande d'enregistrement au dispositif AP, dans lequel la demande d'enregistrement demande l'enregistrement de secondes informations de capacité du premier dispositif électronique, et les secondes informations de capacité comprennent la capacité de négociation de paramètres Wi-Fi.

8. Procédé selon la revendication 6 ou 7, dans lequel l'établissement d'un canal Wi-Fi Direct avec le second dispositif électronique en utilisant le paramètre de fréquence radio cible comprend :
l'envoi d'une demande d'établissement de connexion sur la bande de fréquence radio cible et le canal cible, dans lequel la demande d'établissement de connexion demande l'établissement du canal Wi-Fi Direct avec le second dispositif électronique ; et
la réception d'une réponse d'établissement de connexion envoyée par le second dispositif électronique et l'achèvement de l'établissement du canal Wi-Fi Direct.

9. Dispositif électronique, comprenant un processeur (110) et une mémoire (121), dans lequel la mémoire est couplée au processeur, la mémoire est configurée pour stocker un code de programme informatique, le code de programme informatique comprend des instructions informatiques, et, lorsque le processeur lit les instructions informatiques depuis la mémoire, le dispositif électronique est activé pour réaliser le procédé d'établissement de connexion selon l'une quelconque des revendications 1 à 5.

10. Dispositif électronique, comprenant un processeur (110) et une mémoire (121), dans lequel la mémoire est couplée au processeur, la mémoire est configurée pour stocker un code de programme informatique, le code de programme informatique comprend des instructions informatiques, et, lorsque le processeur lit les instructions informatiques depuis la mémoire, le dispositif électronique est activé pour réaliser le procédé d'établissement de connexion selon l'une quelconque des revendications 6 à 8.

11. Support de stockage lisible par ordinateur, comprenant un programme ou des instructions, dans lequel lorsque le programme ou les instructions est/sont exécuté(es), le procédé selon l'une quelconque des revendications 1 à 8 est mis en œuvre.
